# EUROPÄISCHE PATENTSCHRIFT

(11) **EP 1 074 012 B1**
(45) Veröffentlichungstag und Bekanntmachung des Hinweises auf die Patenterteilung: **26.06.2002**
(21) Anmeldenummer: 99920721.0
(22) Anmeldetag: 21.04.1999
(51) Int. Cl.: G09F 9/33, H04N 9/12

(54) **EINRICHTUNG ZUR ERZEUGUNG EINES BILDES**
DEVICE FOR GENERATING AN IMAGE
DISPOSITIF PERMETTANT DE PRODUIRE UNE IMAGE

(30) Priorität: 22.04.1998 DE 19818007
(43) Veröffentlichungstag der Anmeldung: 07.02.2001
(73) Patentinhaber: Deutsches Zentrum für Luft- und Raumfahrt e.V, 53127 Bonn (DE)
(72) Erfinder: BRAUCH, Uwe, D-70565 Stuttgart (DE); OPOWER, Hans, D-82152 Krailling (DE)
(74) Vertreter: Beck, Jürgen, Dr. Dipl.-Phys.
(86) Internationale Anmeldenummer: EP9902672
(87) Internationale Veröffentlichungsnummer: WO9954861

(56) Entgegenhaltungen:
- EP-A- 0 068 288
- EP-A- 0 455 449
- EP-A- 0 758 778
- WO-A-90/12384
- GB-A- 2 148 570

## Beschreibung

Die Erfindung betrifft eine Einrichtung zur Erzeugung eines Bildes auf einer Bildfläche mit N x M einzeln ausleuchtbaren Bildpunkten, umfassend eine Vielzahl von Halbleiterstrahlungsquellen, von denen jede Strahlung mit mindestens einer Farbe erzeugt, eine Abbildungsoptik mit einer Strahlführung, durch welche mit jeder der Halbleiterstrahlungsquellen eine Mehrzahl von Bildpunkten ausleuchtbar ist.

Die bislang bekannten Einrichtungen zur Erzeugung eines Bildes mit Laserstrahlungsquellen arbeiten auf der Basis von Projektionseinrichtungen, d. h. es ist ein großer Abstand zwischen der Abbildungsoptik und der Bildfläche vorgesehen und die Vielzahl von Strahlungsquellen dient dazu, zu einem Zeitpunkt einen ganzzahligen Bruchteil der N-Bildpunkte einer Zeile oder M-Bildpunkte einer Spalte oder die gesamten N-Bildpunkte einer Zeile oder die gesamten M-Bildpunkte einer Spalte auszuleuchten und zum nächsten Zeitpunkt auf die nächste Vielzahl von Bildpunkten überzugehen. Vorzugsweise ist dabei die Abbildungsoptik so angeordnet, daß sie die Strahlung sämtlicher Strahlungsquellen umfaßt und als Einheit auf die Bildfläche abbildet und von Zeitpunkt zu Zeitpunkt die Ausleuchtung einer ersten Vielzahl von Bildpunkten auf die nächste Vielzahl von Bildpunkten weiterschaltet.

Ausgehend von diesen bekannten Lösungen liegt der Erfindung die Aufgabe zugrunde, eine Einrichtung zur Erzeugung eines Bildes zu schaffen, bei welcher die Möglichkeit besteht, unter Verwendung von Strahlungsquellen in möglichst einfacher Art und Weise ein Bild auf einer Bildfläche zu erzeugen.

Diese Aufgabe wird bei einer Einrichtung zur Erzeugung eines Bildes der eingangs genannten Art erfindungsgemäß dadurch gelöst, daß die Bildfläche in eine Vielzahl von zusammenhängenden Teilbildflächen, umfassend jeweils ein zweidimensionales Ensemble von Bildpunkten, aufgeteilt ist, daß jeder der Teilbildflächen eine Beleuchtungseinheit zugeordnet ist und daß jede Beleuchtungseinheit mindestens eine Halbleiterstrahlungsquelle und eine dieser Beleuchtungseinheit zugeordnete eigene Abbildungsoptik aufweist, welche einen Strahlungsaustritt in freier Strahlausbreitung auf die entsprechende Teilbildfläche abbildet.

Der Vorteil der erfindungsgemäßen Lösung ist darin zu sehen, daß die einzelnen Beleuchtungseinheiten in einfacher Weise in dem erforderlichen Abstand von der Bildfläche angeordnet und zusammengesetzt werden können, da aufgrund der freien Strahlausbreitung zwischen den Beleuchtungseinheiten und den entsprechenden Teilbildflächen der Bildfläche keinerlei strahlungsführende Elemente, wie zum Beispiel Lichtleiter, zwischen den Beleuchtungseinheiten und der Bildfläche erforderlich sind um die Strahlung zu den einzelnen Bildpunkten zu führen, da dies die der Beleuchtungseinheit zugeordnete Abbildungsoptik mit freier Strahlausbreitung leistet.

Der Vorteil der erfindungsgemäßen Lösung ist ferner darin zu sehen, daß mit dieser die Möglichkeit besteht, die Strahlführung einfacher auszuführen, da die Strahlung einer Beleuchtungseinheit lediglich zum Ausleuchten einer der Teilbildflächen eingesetzt wird und somit die Strahlführung einfach erfolgen kann.

Insbesondere ist eine Strahlführung in Form einer Strahlablenkung einfach realisierbar, da der Strahl lediglich über die Dimensionen einer Teilbildfläche zu bewegen ist und nicht, wie beim Stand der Technik, zumindest in einer Richtung über die gesamte Erstreckung der Bildfläche zu bewegen ist.

Diese Lösung erlaubt es, bei gleichbleibender Dimension der Bildpunkte und der Bildfläche und noch mit einfachen Mitteln realisierbarem maximalem Ablenkwinkel, den Abstand zwischen Bildfläche und Abbildungsoptik so gering zu gestalten, daß die gesamte Einrichtung als Flachbildschirm ausgebildet werden kann.

Durch die erfindungsgemäße Idee, einzelne Beleuchtungseinheiten mit mindestens einer Strahlungsquelle und einer dieser eigens zugeordneten Abbildungsoptik zu schaffen, steht ein Konzept zur Verfügung, welches es erlaubt, eine, der Zahl der Teilbildflächen entsprechende Vielzahl identischer Beleuchtungseinheiten herzustellen und diese miteinander zu kombinieren, um die Gesamtzahl der Teilbildflächen auszuleuchten.

Ferner besteht bei dieser Lösung auch die Möglichkeit, die Abbildungsoptiken einfacher auszugestalten als die aus dem Stand der Technik bekannten Abbildungsoptiken, bei denen es erforderlich war, ein Strahlungsfeld mit nennenswert großem Querschnitt, zusammengesetzt aus der Vielzahl von Strahlungen, abzubilden und in zumindest einer Richtung über große Dimensionen abzulenken.

Um besonders rationell erfindungsgemäße Einrichtungen herstellen zu können, ist vorzugsweise vorgesehen, daß die Beleuchtungseinheiten identisch ausgebildet sind. Diese Möglichkeit erlaubt es, die Beleuchtungseinheiten für erfindungsgemäße Einrichtungen in hohen Stückzahlen herzustellen, wobei auch fehlerhaft hergestellte Beleuchtungseinheiten die Fertigungskosten nicht signifikant erhöhen, da diese vor dem Zusammenbau der Beleuchtungseinheiten zu erfindungsgemäßen Einrichtungen durch Prüfverfahren eliminiert werden können.

Besonders günstig ist es hierbei, wenn die Beleuchtungseinheiten identisch aufgebaute und identisch ansteuerbare Module sind, so daß auch die Ansteuerung der Beleuchtungseinheiten besonders vorteilhaft erfolgen kann.

Eine besonders günstige Anordnung der Beleuchtungseinheiten sieht vor, daß diese in einer zur Bildfläche ungefähr parallel verlaufenden Fläche angeordnet sind. Eine derartige Anordnung der Beleuchtungseinheiten erlaubt es, die Positionierung der Beleuchtungseinheiten relativ zueinander beim Zusammenbau einer erfindungsgemäßen Einrichtung zu automatisieren.

Besonders vorteilhaft läßt sich dieses Anordnen der Beleuchtungseinheiten dann realisieren, wenn die Beleuchtungseinheiten auf einem Träger angeordnet sind, mit welchem eine exakte Positionierung der Beleuchtungseinheiten relativ zueinander möglich ist.

Besonders zweckmäßig läßt sich die exakte Positionierung der Beleuchtungseinheiten dann realisieren, wenn diese mit identischen Haltekörpern versehen sind und mit diesen in entsprechende Aufnahmen am Träger gehalten sind.

Hinsichtlich der Art und Anordnung der Teilbildflächen wurden bislang keine näheren Angaben gemacht.

So könnten prinzipiell die Teilbildflächen unterschiedliche Größen aufweisen.

Besonders günstig ist es jedoch, wenn die Bildfläche aus Gruppen von Teilbildflächen gleicher Größe aufgebaut ist, d. h., daß die Gesamtheit der Teilbildflächen mehrere Gruppen von Teilbildflächen aufweist und innerhalb jeder der Gruppen von Teilbildflächen diese dieselbe Größe aufweisen.

Damit ist jedoch nicht Voraussetzung, daß die Teilbildflächen innerhalb einer Gruppe unmittelbar nebeneinander liegen, sondern es ist ebenfalls denkbar, die Teilbildflächen aus unterschiedlichen Gruppen ineinander verschachtelt anzuordnen.

Das Vorsehen Gruppen gleicher Teilbildflächen erlaubt bei der Herstellung der Beleuchtungseinheiten ebenfalls eine Vereinfachung, da für jede Gruppe von Teilbildflächen identische Beleuchtungseinheiten zur Verfügung gestellt werden können.

Noch vorteilhafter ist es jedoch, wenn alle Teilbildflächen die identische Größe aufweisen, so daß für die Bildfläche identische Beleuchtungseinheiten Verwendung finden können.

Hinsichtlich der Form und Größe der Teilbildflächen wurden bislang ebenfalls keine näheren Angaben gemacht. So sieht ein vorteilhaftes Ausführungsbeispiel vor, daß die Teilbildflächen in den beiden die Bildfläche aufspannenden und quer zueinander verlaufenden Richtungen Maximalerstreckungen aufweisen, die in der gleichen Größenordnung sind. D. h., daß die Teilbildflächen keine linienähnliche Form aufweisen sollen, sondern eine maximal rechteckförmige Form.

Besonders vorteilhaft ist es jedoch, wenn die Teilbildflächen in den beiden die Bildfläche aufspannenden Richtungen Maximalerstreckungen aufweisen, die ungefähr gleich groß sind. D. h., daß die Form der Teilbildflächen eine sich einem regelmäßigen Vieleck oder einem Quadrat annähernde Form aufweisen.

Eine besonders vorteilhafte Lösung sieht vor, daß die Teilbildflächen näherungsweise die Form eines Quadrats oder eines Sechsecks aufweisen.

Der Vorteil derartiger Formen der Teilbildflächen ist darin zu sehen, daß ausgehend von einem Mittelpunkt der Teilbildflächen die maximale Strahlablenkung in den beiden, die Bildfläche aufspannenden Richtungen ungefähr gleich groß ist und somit die Abbildungsoptik möglichst einfach gestaltet werden kann und auch die Strahlablenkung entsprechend einfach gewählt werden kann.

Hinsichtlich der Anordnung der zu jeder Teilbildfläche gehörenden Bildpunkte wäre es beispielsweise denkbar, die Teilbildflächen insoweit zu überlappen, als zu einer Teilbildfläche jeweils übernächste Bildpunkte der Bildfläche gehören, während die dazwischen liegenden Bildpunkte zu einer anderen Teilbildfläche gehören.

Dies wäre beispielsweise insbesondere bei der als Überlappung am Rand von aufeinanderfolgender Teilbildflächen möglich.

Besonders einfach läßt sich die erfindungsgemäße Lösung jedoch dann gestalten, wenn alle Bildpunkte einer Teilbildfläche unmittelbar nebeneinander liegen, d. h., daß jede der Teilbildflächen stets durch das Ensemble von unmittelbar nebeneinander liegenden Bildpunkten gebildet wird, an welche sich dann das zur nächsten Teilbildfläche gehörende Ensemble unmittelbar anschließt, jedoch ohne daß sich die Teilbildflächen dabei überlappen.

Hinsichtlich der Realisierung der Strahlablenkung wurden im Zusammenhang mit den bislang beschriebenen Ausführungsbeispielen keine näheren Angaben gemacht. So wäre es beispielsweise denkbar, eine Strahlablenkung dadurch zu erhalten, daß die Strahlablenkung für alle Beleuchtungseinheiten durch eine einzige Strahlablenkungseinrichtung erfolgt. D. h., daß beispielsweise ein Strahlablenkungselement auf alle Beleuchtungseinheiten wirkt oder für alle Beleuchtungseinheiten wirksam wird, wobei eine Relativbewegung zwischen Halbleiterstrahlungsquelle und/oder zumindest einem Teil der Abbildungsoptik sowie der Teilbildfläche für alle Beleuchtungseinheiten gleichzeitig generiert wird.

Da im vorliegenden Fall mit einer Vielzahl von Beleuchtungseinheiten gearbeitet wird, die unmittelbar einer Teilbildfläche zugeordnet sind, wäre eine derartige, für alle Beleuchtungseinheiten wirksame Strahlablenkungseinrichtung mechanisch und optisch präzise auf die Beleuchtungseinheiten abgestimmt zu realisieren.

Ein besonders vorteilhaftes Ausführungsbeispiel sieht daher vor, daß jeder Beleuchtungseinheit eine eigene Strahlablenkungseinrichtung zugeordnet ist, d. h., daß jede Beleuchtungseinheit nicht nur eine Halbleiterstrahlungsquelle und eine Abbildungsoptik, sondern auch eine dieser zugeordnete Strahlablenkungseinrichtung aufweist, so daß derartige Beleuchtungseinheiten als standardisierte, mechanisch und optisch einfach aufzubauende Einheiten herstellbar sind, die miteinander kombinierbar sind, um die Vielzahl von Teilbildflächen auszuleuchten.

Eine derartige Strahlablenkungseinrichtung ist vorzugsweise so ausgebildet, daß mit dieser eine Relativbewegung des aus jeder Beleuchtungseinheit austretenden Strahlungsfeldes zu den Bildpunkten der Teilbildfläche erzeugbar ist.

Hierzu ist vorzugsweise vorgesehen, daß mindestens eine optische Komponente der Beleuchtungseinheit, d. h. der Halbleiterstrahlungsquelle und/oder der Abbildungsoptik, relativ zu der Teilbildfläche bewegbar ist.

Vorzugsweise besteht eine Möglichkeit zur bewegbaren Anordnung einer der optischen Komponenten darin, den Strahlungsaustritt des Strahlungsfeldes aus der Halbleiterstrahlungsquelle relativ zu der Teilbildfläche bewegbar anzuordnen.

Alternativ oder ergänzend dazu ist es ebenfalls noch möglich, mindestens eine Komponente der Abbildungsoptik relativ zur Teilbildfläche bewegbar anzuordnen.

Zur Ausbildung der Strahlablenkungsvorrichtung selbst wurden bislang keine näheren Angaben gemacht. So wäre es beispielsweise denkbar, für die Strahlablenkungseinrichtung einen konventionellen Antrieb vorzusehen. Besonders günstig ist es jedoch, wenn die Strahlablenkungseinrichtung mindestens einen mikromechanischer Antrieb umfaßt.

Um die Strahlablenkung in zwei eine Fläche definierenden Richtungen vorgeben zu können, ist vorzugsweise vorgesehen, daß die Strahlablenkungseinrichtung zwei in quer zueinander verlaufende Richtungen wirksame Antriebe umfaßt.

Die Antriebe zur Erzeugung der Strahlablenkung können in unterschiedlichster Art und Weise ausgebildet sein.

Ein vorteilhaftes Ausführungsbeispiel sieht vor, daß der Antrieb als Verschiebeantrieb ausgebildet ist.

Vorzugsweise ist der Verschiebeantrieb dabei so ausgebildet, daß er einen sich quer zur Verschieberichtung erstreckenden Führungsarm aufweist, welcher an einem Ende die zu verschiebende optische Komponente der Beleuchtungseinheit trägt und am anderen Ende fest angeordnet ist.

Vorzugsweise weist dabei der Führungsarm eine Länge auf, welche ein Vielfaches des zu durchlaufenden Verschiebewegs beträgt, so daß die Bewegung der optischen Komponente in der Verschieberichtung näherungsweise linear erfolgt.

Ferner ist vorzugsweise vorgesehen, daß bei dem Verschiebeantrieb der Führungsarm durch ein elektrisches Feld auslenkbar ist.

Vorzugsweise definiert der Führungsarm eine Ausgangsstellung, von welcher ausgehend der Arm mittels eines elektrischen Feldes auslenkbar ist.

Um eine steuerbare Bewegung der optischen Komponente in der Verschieberichtung zu erreichen, ist vorzugsweise der Arm als eine Ausgangsstellung definierendes federelastisches Element ausgebildet, welches einer zunehmenden Auslenkung aus der Ausgangsstellung eine zunehmende Rückstellkraft entgegensetzt, so daß durch Vorgabe der Stärke des elektrischen Feldes auch die Auslenkung ausgehend von der Ausgangsstellung einstellbar ist.

Alternativ zum Vorsehen eines Verschiebeantriebs ist vorzugsweise vorgesehen, daß der Antrieb als Kippantrieb ausgebildet ist, d. h., daß mittels des Antriebs eine Verkippung der optischen Komponente, vorzugsweise einer Komponente der Abbildungsoptik, um eine Kippachse erreichbar ist.

Ein derartiger Kippantrieb ist vorzugsweise so ausgebildet, daß er zwei um eine Kippachse relativ zueinander verkippbare Trägerelemente aufweist, wobei eines der Trägerelemente auf einer Basis angeordnet ist und das andere der Trägerelemente die zu verkippende Komponente trägt.

Vorzugsweise sind die beiden Trägerelemente durch einen elastisch deformierbaren Materialsteg verbunden, welcher aufgrund seiner Deformierbarkeit die Kippachse zwischen den beiden Trägerelementen definiert.

Zum Erreichen einer Verkippung der beiden Trägerelemente relativ zueinander sind diese vorzugsweise mittels eines auf diese einwirkenden elektrischen Feldes mit einer Kraft beaufschlagbar.

Im einfachsten Fall ist dabei die Kraft durch eine Kondensatoranordnung aufbringbar.

Vorzugsweise wirkt der elastisch deformierbare Steg zwischen den beiden Trägerelementen so, daß er eine Ausgangsstellung definiert und ausgehend von der Ausgangsstellung einer Kippbewegung eine mit zunehmender Verkippung stärker werdende Rückstellkraft entgegensetzt, welche dann durch eine durch das elektrische Feld aufzubringende Kraft zu kompensieren ist, um eine Kippbewegung um einen definierten Kippwinkel zu erreichen.

Hinsichtlich des Betriebs der Antriebe, insbesondere der mikromechanischen Antriebe, sind die unterschiedlichsten Lösungsmöglichkeiten denkbar. So sieht eine vorteilhafte Lösungsmöglichkeit vor, einen der mikromechanischen Antriebe als statischen, einstellbaren Antrieb auszubilden, d. h. als Antrieb, mit welchem Verschiebungen um definierte Distanzen oder Kippbewegungen um definierte Winkel realisierbar sind, wobei vorzugsweise die jeweilige Stellung von dem Antrieb über einen gewissen Zeitraum aufrechterhalten werden kann.

Eine andere vorteilhafte Lösungsmöglichkeit, zumindest für die Bewegung in einer Richtung, sieht vor, daß der mikromechanische Antrieb als Schwingantrieb ausgebildet ist, d. h., daß dieser Antrieb nicht so betrieben wird, daß dieser statische Zustände, d. h. Verschiebungen oder Kippbewegungen, einhält, sondern daß dieser mit einer vorgebbaren Frequenz und einer vorgebbaren Amplitude ständig hin und her schwingt. Diese Lösung hat den Vorteil, daß damit eine schnelle Bewegung in der jeweiligen Richtung mit ausreichender Präzision in einfacher Weise erzeugbar ist.

Besonders günstig ist es dabei, wenn der Schwingantrieb nahe seiner Resonanzfrequenz arbeitet, da in diesem Fall die Möglichkeit besteht, den Schwingantrieb mit geringen Leistungen zu betreiben.

Alternativ oder ergänzend zu den vorstehenden Ausführungsbeispielen sieht eine besonders günstige Lösung vor, daß jede Beleuchtungseinheit eine Reihe von Strahlungsaustritten aufweist, welche die Abbildungsoptik gleichzeitig auf eine Bildpunktreihe der Teilbildfläche abbildet.

Eine derartige Anordnung schafft die Möglichkeit, die Zahl der gleichzeitig ausgeleuchteten Bildpunkte zu erhöhen und somit beispielsweise die Einrichtungen zum Ausleuchten sämtlicher Bildpunkte einer Teilbildfläche zu vereinfachen.

So wäre es beispielsweise denkbar, die Zahl der Strahlungsaustritte gleich der Zahl der Hälfte der Bildpunkte der Bildpunktreihe auszubilden und gleichzeitig jeweils übernächste Bildpunkte auszuleuchten, wobei in diesem Fall in Richtung der Reihe lediglich eine Verschiebung des auf der Teilbildfläche auftreffenden Strahlungsfeldes um einen Bildpunkt erforderlich wäre. Dies würde ebenfalls die Möglichkeit schaffen, in dieser Richtung eine einfache Einrichtung zum Bewegen des Strahlungsfeldes von dem einen Bildpunkt zu dem nächstliegenden Bildpunkt vorzusehen und gleichzeitig eine Bewegung quer zu der Reihe über sämtliche Reihen der Teilbildfläche zu realisieren. In beiden Fällen wäre es denkbar, oszillierende Antriebe hierzu vorzusehen.

Eine besonders günstige Lösung sieht jedoch vor, daß die Zahl der Strahlungsaustritte der Reihe der Zahl der Bildpunkte in einer zu der Reihe parallelen Richtung der entsprechenden Teilbildfläche entspricht und daß die Ausleuchtung der Teilbildfläche durch eine Strahlablenkung in Richtung quer zu der Reihe erfolgt.

Diese Lösung schafft die Möglichkeit, alle Bildpunkte der Teilbildfläche durch eine Strahlablenkung in nur einer Richtung zu realisieren, wobei die Realisierung der Strahlablenkung in unterschiedlichster Weise, wie beispielsweise im Zusammenhang mit den voranstehenden Ausführungsformen beschrieben, realisiert werden kann.

Um bei dieser Ausführungsform der erfindungsgemäßen Einrichtung die jeweilige Beleuchtungseinheit sinnvoll an einem Träger anordnen zu können, ist vorzugsweise vorgesehen, daß die Ausdehnung der Reihe von Strahlungsaustritten in Richtung ihrer Längsrichtung kleiner ist als die Ausdehnung der entsprechenden Bildpunktreihe in dieser Richtung. Damit kann jede Beleuchtungseinheit in Richtung der Reihe eine kleinere Ausdehnung aufweisen als die entsprechende Teilbildfläche und somit besteht die Möglichkeit, alle Beleuchtungseinheiten raumsparend an einem Träger anzuordnen, dessen Ausdehnung maximal der Ausdehnung der Bildfläche entspricht.

Um die einzelnen Bildpunkte farbig ausleuchten zu können, hat es sich als besonders günstig erwiesen, wenn jede Beleuchtungseinheit drei Reihen von Strahlungsaustritten aufweist.

Vorzugsweise ist dabei die Beleuchtungseinheit so ausgebildet, daß aus jeder der Reihen von Strahlungsaustritten Strahlung einer von drei zu Weißlicht überlagerbaren Farben austritt, so daß sich durch die gesteuerte Aktivierung der drei Reihen definierte Farbmischungen erreichen lassen.

Um vorzugsweise die drei Reihen zweckmäßig mit einer Abbildungsoptik auf die Teilbildfläche abbilden zu können, ist vorgesehen, daß jede der verschiedenen Reihen von Strahlungsaustritten über eine Steuerung zeitlich getrennt aktivierbar ist. In diesem Fall erfolgt eine Farbmischung aufgrund der Trägheit des optischen Empfinden eines Betrachters nicht durch die zeitliche Kongruenz des Auftretens der drei verschiedenen Farben an einem Bildpunkt, sondern das Ausleuchten eines Bildpunkts mit drei verschiedenen Farben erfolgt zeitlich so kurz hintereinander, daß aufgrund der Trägheit des Auges des Betrachters eine Farbmischung durch "Mittelung" des Farbempfindens erfolgt.

Im Zusammenhang mit der bisherigen Erläuterung der einzelnen Ausführungsbeispiele wäre es prinzipiell möglich gewesen, das Licht einer Halbleiterstrahlungsquelle noch zusätzlichen Modulationen zu unterwerfen. Besonders bevorzugt ist jedoch bei den bisher beschriebenen Ausführungsbeispielen, daß jedem Strahlungsaustritt mindestens eine Halbleiterstrahlungsquelle zugeordnet ist und daß die Intensitätsmodulation dieses Strahlungsaustritts durch Intensitätsmodulation der Halbleiterstrahlungsquelle erfolgt.

Alternativ dazu sieht eine weitere vorteilhafte erfindungsgemäße Ausführungsform vor, daß die Beleuchtungseinheit mindestens eine Reihe von Strahlung in Transmission modulierenden Modulationselementen aufweist, deren jeweilige Lichtaustrittsflächen die Strahlungsaustritte bilden, welche die Abbildungsoptik gemeinsam auf die Teilbildfläche abbildet. Das Konzept dieser Lösung sieht somit zusätzliche Modulationselemente vor, welche es erlauben, das Licht einer Halbleiterstrahlungsquelle gleichzeitig zum Ausleuchten mehrere Bildpunkte einzusetzen, in dem eine selektive Modulation der Intensität für den jeweiligen Bildpunkt über die zusätzlich vorgesehenen Modulationselemente erfolgt, wobei vorzugsweise mehreren, in Reihen angeordnete Modulationselemente vorgesehen sind, deren Strahlungsaustritte gleichzeitig durch die Abbildungsoptik auf die Teilbildfläche abgebildet wird, so daß gleichzeitig die Ausleuchtung mehrere Bildpunkte erfolgt.

Besonders günstig ist es hierbei, wenn die Beleuchtungseinheit eine zweidimensionale Matrix von Modulationselementen aufweist, welche eine zweidimensionale Matrix von Strahlungsaustritten bilden, wobei diese Strahlungsaustritte alle gleichzeitig von der Abbildungsoptik auf die Teilbildfläche abgebildet werden.

Grundsätzlich ist es hierzu nicht erforderlich, daß die Zahl der Strahlungsaustritte der Zahl der Bildpunkte der Teilbildfläche entspricht. Es ist stets möglich, durch zusätzliche Strahlablenkung eine Teilmenge der Bildpunkte einer Teilbildfläche gleichzeitig auszuleuchten und nachfolgend die nächste Teilmenge, so lange, bis sämtliche Bildpunkte der Teilbildfläche ausgeleuchtet sind. Besonders günstig ist es jedoch, wenn die Zahl der Modulationselemente der Matrix der Zahl der Bildpunkte der entsprechenden Teilbildfläche entspricht, so daß gleichzeitig sämtliche Bildpunkte einer Teilbildfläche ausleuchtbar sind.

Im Zusammenhang mit der bislang beschriebenen Ausführungsform wurde nicht im Näheren darauf eingegangen, wie die Ausleuchtung der Strahlungsaustritte der Modulationselemente erfolgen soll. Eine besonders günstige Lösung sieht vor, daß die Modulationselemente Eintrittsflächen aufweisen, welche die mindestens eine Halbleiterstrahlungsquelle ausleuchtet. Das heißt, daß in diesem Fall eine Halbleiterstrahlungsquelle dazu eingesetzt wird, die Lichteintrittsflächen aller Modulationselemente einer Beleuchtungseinheit auszuleuchten. Es ist aber auch denkbar, die Modulationselemente in Teilmengen zu unterteilen und jeder Teilmenge eine Halbleiterstrahlungsquelle zuzuordnen.

Eine aus fertigungstechnischen Gründen besonders kostengünstige Lösung sieht jedoch vor, daß die mindestens eine Halbleiterstrahlungsquelle die Lichteintrittsflächen aller Modulationselemente einer Beleuchtungseinheit ausleuchtet, wobei vorzugsweise diese Art der Ausbildung der erfindungsgemäßen Einrichtung von einer einfarbigen Ausleuchtung der Bildelemente ausgeht.

Ist eine farbige Ausleuchtung der Bildpunkte vorgesehen, so ist vorzugsweise vorgesehen, daß mehrere jeweils unterschiedliche Farben liefernde Halbleiterstrahlungsquellen für jede Beleuchtungseinheit eingesetzt werden.

Generell gilt für alle bislang beschriebenen Ausführungsbeispiele daß vorzugsweise bei einer farbigen Ausleuchtung der Bildpunkte die Beleuchtungseinheit mindestens drei Halbleiterstrahlungsquellen zur Ausleuchtung jedes Strahlungsaustritts aufweist, welche Strahlung in drei zu Weißlicht überlagerbaren Farben erzeugen.

Diese Lösung sieht beispielsweise vor, daß die Strahlung der drei Halbleiterstrahlungsquellen vor dem jeweiligen Strahlungsaustritt vermischt wird.

Alternativ dazu ist vorgesehen, daß jedem Bildpunkt drei Strahlungsaustritte zugeordnet sind, wobei aus jedem der Strahlungsaustritte Strahlung in einer von drei zu Weißlicht überlagerbaren Farben austritt.

Grundsätzlich ist es dabei möglich, jeweils die Farben durch gleichzeitiges Ausleuchten eines Bildpunktes zu mischen.

Es besteht aber auch die Möglichkeit, daß die drei jeweils unterschiedliche Farben erzeugenden Halbleiterstrahlungsquellen zu unterschiedlichen Zeitpunkten aktivierbar sind, wobei die Aktivierung in derart kurzen Zeiträumen aufeinanderfolgend erfolgen muß, daß das Auge eines Betrachters die drei aufeinanderfolgenden verschiedenen Farben mittelt und somit einen Eindruck einer Farbmischung erhält.

Im Rahmen der bisherigen Erläuterung der Halbleiterstrahlungsquellen wurde nicht näher darauf eingegangen, wie diese Halbleiterstrahlungsquellen ausgebildet sein sollen. Eine vorteilhafte Möglichkeit sieht vor, daß die Halbleiterstrahlungsquellen als Halbleiterdioden ausgebildet sind, wobei die Halbleiterdioden beispielsweise als superstrahlende Halbleiterdioden ausgebildet sein können.

Eine besonders vorteilhafte Variante einer Halbleiterdiode sieht vor, daß diese als resonante LED ausgebildet ist.

Eine andere vorteilhafte Ausbildung der Halbleiterstrahlungsquelle sieht vor, daß die Halbleiterstrahlungsquelle als Laserstrahlungsquelle ausgebildet ist.

Hinsichtlich der Ausbildung der Laserstrahlungsquelle wurden im Zusammenhang mit den bisherigen Ausführungsbeispielen keine näheren Angaben gemacht. Es wurde lediglich definiert, daß die Laserstrahlungsquelle so ausgebildet sein soll, daß sie mindestens Laserstrahlung mit einer Farbe erzeugt. Damit wären einfache Dunkel/Hell-Kontrastbilder erzeugbar. Eine besonders vorteilhafte Lösung, insbesondere beispielsweise zur Anwendung in fortgeschrittener Display- oder Fernsehtechnik sieht vor, daß die Laserstrahlungsquelle Laserstrahlung mit mehreren Farben erzeugt. Besonders günstig ist es, insbesondere um alle Farben herstellen zu können, wenn die Laserstrahlungsquelle Laserstrahlung mit drei zu Weiß überlagerbaren Farben, vorzugsweise Rot, Grün und Blau, erzeugt.

Dabei ist es denkbar, die Laserstrahlungsquelle so auszubilden, daß sie beispielsweise für jede der Laserstrahlungen eine Quelle, vorzugsweise einen Halbleiterlaser umfaßt, die nahe beieinander sitzen.

Die Laserstrahlung aus jedem der Halbleiterlaser kann dabei durch entweder eine Abbildungsoptik auf die Teilbildfläche abgebildet werden oder durch die jeweils für jede der Quellen vorgesehene Abbildungsoptik.

Eine andere vorteilhafte Lösung sieht vor, daß jede Laserstrahlung mit mehreren Farben erzeugende Laserstrahlungsquelle mehrere die Laserstrahlung mit den unterschiedlichen Farben erzeugenden Quellen aufweist und die unterschiedlichen Farben in einen Lichtleiter eingekoppelt werden, welcher zur Abbildungsoptik führt. Durch die Vereinigung der unterschiedlichen Farben in einem Lichtleiter läßt sich eine einfache geometrische Konfiguration herstellen, mit welcher die drei Farben gemeinsam mit einer Abbildungsoptik auf die Teilbildfläche abbildbar sind.

Dabei ist es je nach Art der Quellen und der Ansteuerung der einzelnen Bildpunkte denkbar, die Beleuchtungseinheit so auszubilden, daß sie jeden Bildpunkt mit den für diesen vorgesehenen Farben zu dem jeweiligen Zeitpunkt gleichzeitig ausleuchtet oder daß sie die einzelnen Farben des Bildpunktes in kurzen Abständen aufeinanderfolgend ausleuchtet, so daß durch ein ein derartiges Bild betrachtendes menschliches Auge eine Mittelung über die Farben erfolgt.

Unter einem Bildpunkt im Sinne der vorliegenden Erfindung ist dabei insbesondere bei Erzeugung eines mehrfarbigen Bildes nicht ein einziger geometrischer Punkt zu verstehen, in welchem sich die drei Farben überlagern. Ein Bildpunkt im Sinne der Erfindung hat eine endliche Ausdehnung und kann im Falle von drei Farben so ausgebildet sein, daß sich die drei Farben entweder vollständig oder teilweise überlagern oder daß die drei Farben nebeneinander liegen und die Gesamtheit der von den drei Farben auszuleuchtenden Flächen diesen einen Bildpunkt definiert.

Hinsichtlich der Ausbildung der Laserstrahlungsquellen wurden bislang keine näheren Angaben gemacht. So sieht eine vorteilhafte Realisierungsmöglichkeit vor, daß die Laserstrahlungsquellen Halbleiterlaser als Quellen für die Laserstrahlung umfassen.

Derartige Halbleiterlaser können beispielsweise Kantenemitter oder Vertikalemitter sein.

Für die Erzeugung kurzwelliger Laserstrahlung ist es im Rahmen der Erfindung auch denkbar, einen Halbleiterlaser mit Frequenzverdopplung einzusetzen.

Weitere Merkmale und Vorteile der Erfindung sind Gegenstand der nachfolgenden Beschreibung sowie der zeichnerischen Darstellung einiger Ausführungsbeispiele. In der Zeichnung zeigen:
- Fig. 1: eine schematische Darstellung des grundsätzlichen Aufbaus einer erfindungsgemäßen Lösung mit Bildfläche und Beleuchtungseinheiten;
- Fig. 2: eine schematische Darstellung einer ersten Ausführungsform der erfindungsgemäßen Einrichtung;
- Fig. 3: eine schematische Darstellung einer zweiten Ausführungsform einer erfindungsgemäßen Einrichtung in Gesamtansicht;
- Fig. 4: eine Draufsicht in Richtung des Pfeils A in Fig. 3;
- Fig. 5: eine Draufsicht in Richtung des Pfeils B in Fig. 3;
- Fig. 6: eine Ansicht ähnlich Fig. 3 einer dritten Ausführungsform einer erfindungsgemäßen Einrichtung;
- Fig. 7: eine perspektivische Ansicht einer vierten Ausführungsform einer erfindungsgemäßen Einrichtung;
- Fig. 8: eine fünfte Ausführungsform einer erfindungsgemäßen Einrichtung;
- Fig. 9: eine vergrößerte Darstellung des einen Umlenkspiegel mit Kippeinrichtung umfassenden Teils in Fig. 8;
- Fig. 10: eine vergrößerte Darstellung einer Draufsicht in Richtung des Pfeils C in Fig. 8;
- Fig. 11: eine perspektivische Ansicht ähnlich Fig. 1 einer sechsten Ausführungsform der erfindung sgemäßen Einrichtung;
- Fig. 12: einen Schnitt längs Linie 12-12 durch die sechste Ausführungsform, dargestellt in Fig. 11;
- Fig. 13: eine perspektivische vereinfachte Darstellung einer siebten Ausführungsform der erfindungs gemäßen Einrichtung mit einer repräsentativ dargestellten Beleuchtungseinheit zur Ausleuchtung einer Teilbildfläche;
- Fig. 14: einen Schnitt längs Linie 14-14 in Fig. 13;
- Fig. 15: einen Schnitt längs Linie 15-15 in Fig. 13;
- Fig. 16: eine Darstellung ähnlich Fig. 13 einer achten Ausführungsform einer erfindungsgemäßen Einrichtung mit mehrfarbiger Ausleuchtung der Bildpunkte;
- Fig. 17: eine schematische Darstellung einer Beleuchtungseinheit einer neunten Ausführungsform;
- Fig. 18: eine schematische Darstellung einer Realisierungsform einer erfindungsgemäßen Bildfläche 12 und
- Fig. 19: einen Schnitt längs Linie 19-19 in Fig. 18

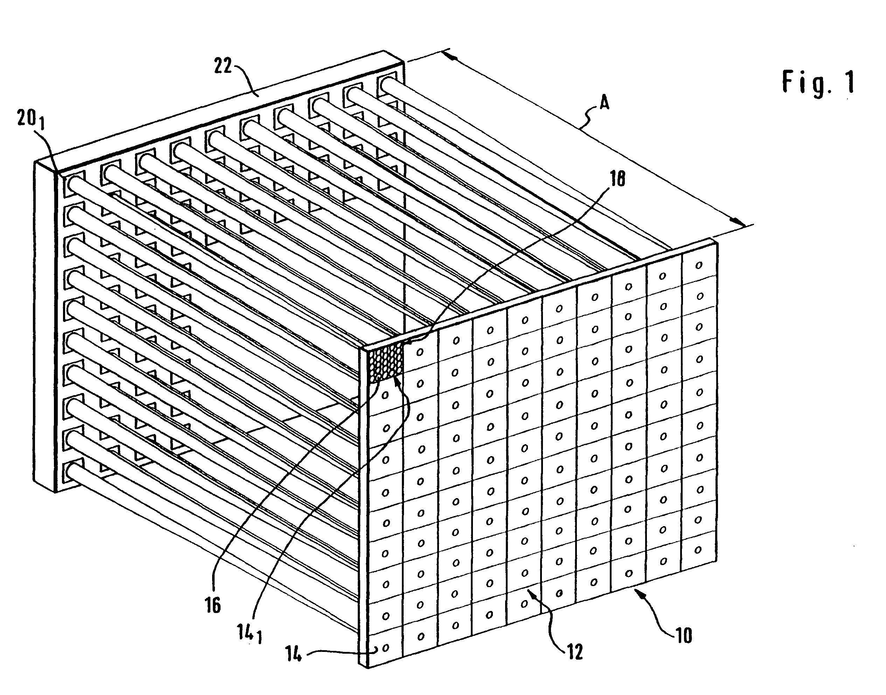

Ein Ausführungsbeispiel einer erfindungsgemäßen Einrichtung zur Erzeugung eines Bildes, als Ganzes dargestellt in Fig. 1, sieht vor, ein als Ganzes mit 10 bezeichnetes Bild mit einer Bildfläche 12 so zu erzeugen, daß die Bildfläche 12 aus einzelnen Teilbildflächen 14 zusammengesetzt ist, wobei am Beispiel der oberen linken Teilbildfläche 14₁ dargestellt ist, daß diese beispielsweise eine Anzahl von n x m, insbesondere 5 x 5, einzelnen Bildpunkten 16 aufweist, wobei die Zahl von 5 x 5 Bildpunkten 16 lediglich einen beispielhaften Wert darstellt, so daß stets n wesentlich kleiner als N und m wesentlich kleiner as M, jedoch stets größer als 1 ist, so daß jede Teilbildfläche ein zweidimensionales Ensemble von Bildpunkten 16 aufweist.

Beispielsweise hat vorzugsweise jede Teilbildfläche 14 eine Abmessung von ungefähr 10 x 10 mm und beispielsweise umfaßt eine reale Bildfläche 12 ungefähr 300 x 200 derartiger Teilbildflächen.

Wie ferner in Fig. 1 ersichtlich, ist jeder der Teilbildflächen 14 eine Beleuchtungseinheit 20 zugeordnet, und alle Beleuchtungseinheiten 20 sind beispielsweise von einer Grundplatte 22 getragen, welche in einem Abstand A hinter der Bildfläche angeordnet ist, welcher beispielsweise in der Größenordnung von 5 cm liegt.

Da jede der Beleuchtungseinheiten 20 eindeutig einer Teilbildfläche 14 zugeordnet ist, erfolgt die Ausleuchtung der Bildpunkte 16 jeder der Teilbildflächen 14 dadurch, daß alle Beleuchtungseinheiten 20 gemeinsam während desselben Zeitraums die diesen zugeordneten Teilbildflächen 14 ausleuchten, wobei beispielsweise die Ausleuchtung der einzelnen Bildpunkte 16 jeder Teilbildfläche 14 sukzessiv nacheinander erfolgt.

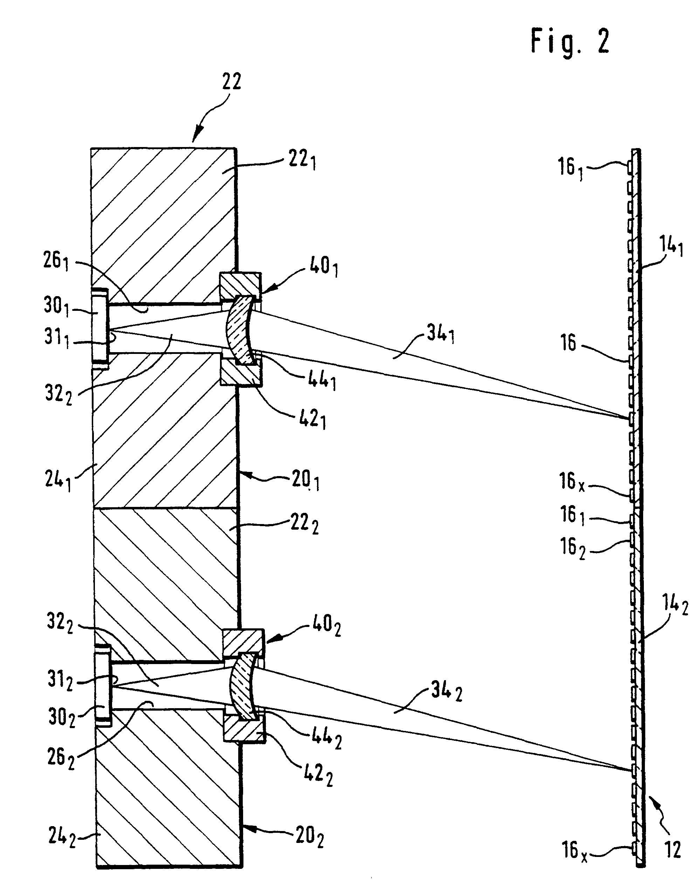

Dies ist exemplarisch bei einer ersten Ausführungsform in Fig. 2 anhand zweier miteinander fest verbundener Beleuchtungseinheiten 20₁ und 20₂ noch im einzelnen verdeutlicht. Jeder dieser Beleuchtungseinheiten 20₁ und 20₂ ist die entsprechende Teilbildfläche 14₁ und 14₂ zugeordnet, von denen jede eine Anzahl von n x m Bildpunkten 16 aufweist und beispielsweise in vertikaler Richtung X Bildpunkte 16₁ bis 16ₓ vorgesehen sind.

Jede der erfindungsgemäßen Beleuchtungseinheiten umfaßt eine Laserstrahlungsquelle 30, die von dem jeder Beleuchtungseinheit 20 zugeordneten Teil 22₁, 22₂ der Grundplatte 22 getragen ist.

Ausgehend von einem Strahlungsaustritt 31₁, 31₂ jeder der Laserstrahlungsquellen 30₁, 30₂, die beispielsweise in der Bildfläche 12 abgewandten Bereichen 24₁ bzw. 24₂ der Teile 22₁ bzw. 22₂ der Grundplatte 22 angeordnet sind, breitet sich durch einen in den Teilen 22₁ bzw. 22₂ vorgesehenen Durchbruch 26₁ bzw. 26₂ ein divergentes Strahlungsfeld 32₁ bzw. 32₂ aus und trifft jeweils auf eine als Ganzes mit 40 bezeichnete Abbildungsoptik 40₁ bzw. 40₂, welche das divergente Laserstrahlungsfeld 32₁ bzw. 32₂ fokussiert und in freier Strahlausbreitung, das heißt zum Beispiel ohne strahlformende Elemente, wie Lichtleiter, als fokussiertes Strahlungsfeld 34₁ bzw. 34₂ zur Ausleuchtung der entsprechenden Bildpunkte 16 auf die Teilbildflächen 14₁ bzw. 14₂ abbildet.

Jede Abbildungsoptik 40₁ bzw. 40₂ umfaßt einen Träger 42₁ bzw. 42₂ und ein Linsensystem 44₁ bzw. 44₂, welches von dem Träger 42₁ bzw. 42₂ gehalten ist.

Eine Ablenkung des fokussierten Strahlungsfeldes 34₁ bzw. 34₂ zur Ausleuchtung der unterschiedlichen Bildpunkte 16 der Teilbildflächen 14₁ bzw. 14₂ erfolgt beispielsweise durch eine Relatiwerschiebung der Laserstrahlungsquelle 30 mit der Abbildungsoptik 40 relativ zur Teilbildfläche 14 mittels einer zeichnerisch nicht dargestellten Strahlablenkungsvorrichtung in zwei quer zueinander verlaufenden Richtungen. Dabei kann entweder die Laserstrahlungsquelle 30 allein in zwei Dimensionen, beispielsweise horizontal und vertikal, bewegt werden oder die gesamte Abbildungsoptik 40 allein in zwei Dimensionen oder beide gemeinsam, wie in Fig. 2 dargestellt.

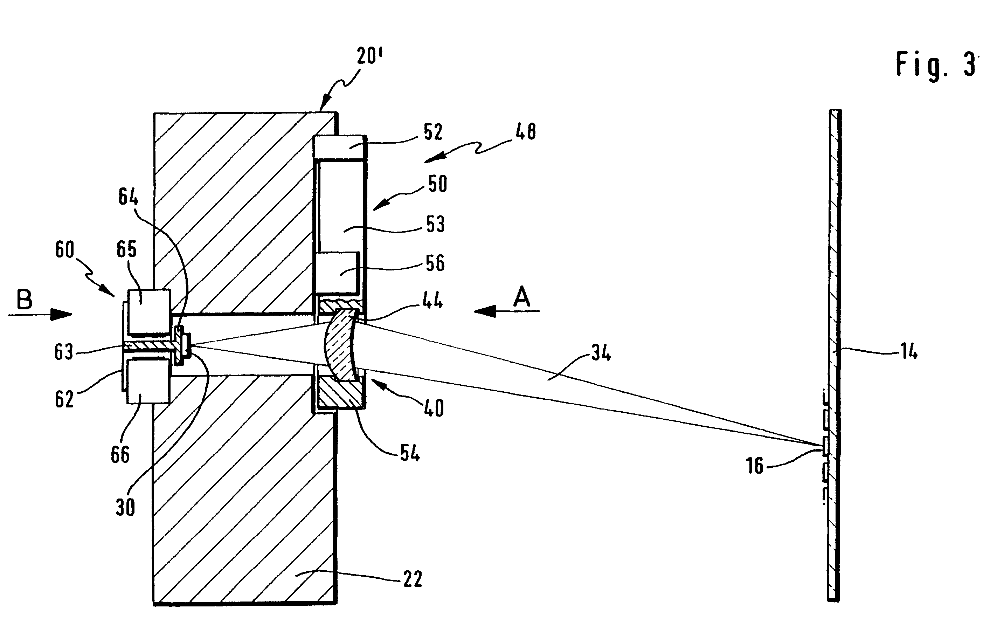

Eine vorteilhafte zweite Ausführungsform, dargestellt in den Figuren 3 bis 5, umfaßt als Strahlablenkungseinrichtung 48 zwei der Beleuchtungseinheit 20' zugeordnete mikromechanische Strahlablenkungssysteme 50 und 60, wobei das mikromechanische Strahlablenkungssystem 50 zur Bewegung der Abbildungsoptik 40 beispielsweise in horizontaler Richtung H dient, während das mikromechanische Strahlablenkungssystem 60 zur Bewegung der Laserstrahlungsquelle 30 in vertikaler Richtung V dient, wie im einzelnen nachfolgend beschrieben ist.

Das Strahlablenkungssystem 50 umfaßt einen Lagerblock 52, welcher fest auf dem entsprechenden Teil der Grundplatte 22 gehalten ist. Von diesem Lagerblock erstreckt sich ausgehend ein Arm 53 in einer Richtung quer zur horizontalen Richtung H bis zu einem Trägerauge 54, welches die Abbildungsoptik 40, beispielsweise das Linsensystem 44, aufnimmt.

Der Arm 53 und das Trägerauge 54 liegen dabei nicht auf dem Teil der jeweiligen Grundplatte 22 auf, sondern sind gegenüber diesen frei beweglich. Aufgrund der Materialelastizität des sich zwischen dem Lagerblock 52 und dem Trägerauge 54 erstreckenden Arm 53 ist somit das Trägerauge 54 in horizontaler Richtung H, näherungsweise parallel zu dieser, ähnlich eines Pendels beweglich, so daß damit auch eine Bewegbarkeit des Linsensystems 44 gegeben ist.

Der Arm 53 weist hierzu vorzugsweise in der horizontalen Richtung H eine möglichst geringe Dicke D auf, welche die Beweglichkeit und Elastizität des Arms 53 mit definiert.

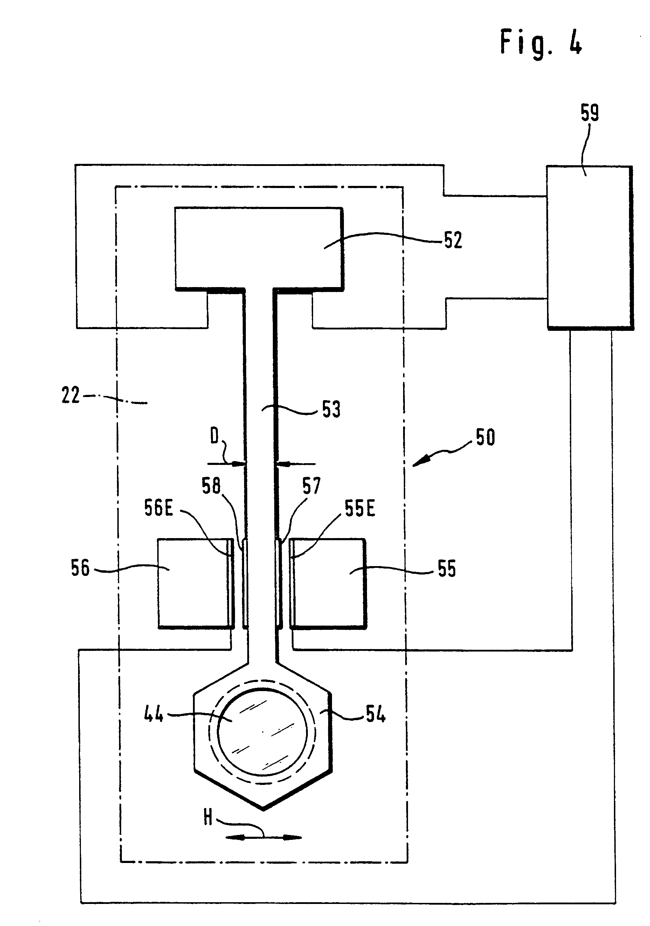

Aufgrund der Bewegbarkeit des Trägerauges 54 durch die im Arm 53 gegebene Materialelastizität bewirkt der Arm 53 ebenfalls eine Rückstellkraft in Richtung seiner Ausgangsstellung, die beispielsweise in Fig. 4 dargestellt ist, so daß zur Auslenkung des Trägerauges 54 gegenüber der Ausgangsstellung eine Kraft erforderlich ist.

Hierzu sind vorzugsweise nahe des Trägerauges 54 und beidseitig des Arms Auslenkelektroden 55 und 56 vorgesehen, welche dem Arm 53 zugewandte Elektrodenflächen 55E und 56E aufweisen, die mit an dem Arm vorgesehenen und auf beiden Seiten desselben angeordneten sowie den Elektrodenflächen 55E, 56E zugewandten flächigen Elektroden 57 und 58 zusammenwirken.

Sowohl die Elektroden 55 und 56 als auch die Elektroden 57 und 58 sind mit einer als Ganzes mit 59 bezeichneten Auslenksteuerung verbunden, mit welcher die Auslenkung des Trägerauges 54 ausgehend von der Ausgangsstellung steuerbar ist. Beispielsweise ist die Steuerung dadurch möglich, daß unterschiedlich hohe Spannungen zwischen den jeweils einander paarweise zugeordneten Elektroden 55 und 57 oder 56 und 58 angelegt werden, die eine Anziehung des Arms 53 in Richtung der jeweiligen Elektrode 55 oder 56 bewirken, und somit den Arm 53 in der gewünschten Richtung entgegen der aufgrund der Materialelastizität auftretenden Rückstellkraft auslenken, wobei die Rückstellkraft üblicherweise mit zunehmender Auslenkung ebenfalls zunimmt, so daß eine geringe Auslenkung durch Anlegen einer geringen Spannung und eine stärkere Auslenkung durch Steigerung der Spannungen zwischen den Elektrodenpaaren 55 und 57 bzw. 56 und 58 möglich ist.

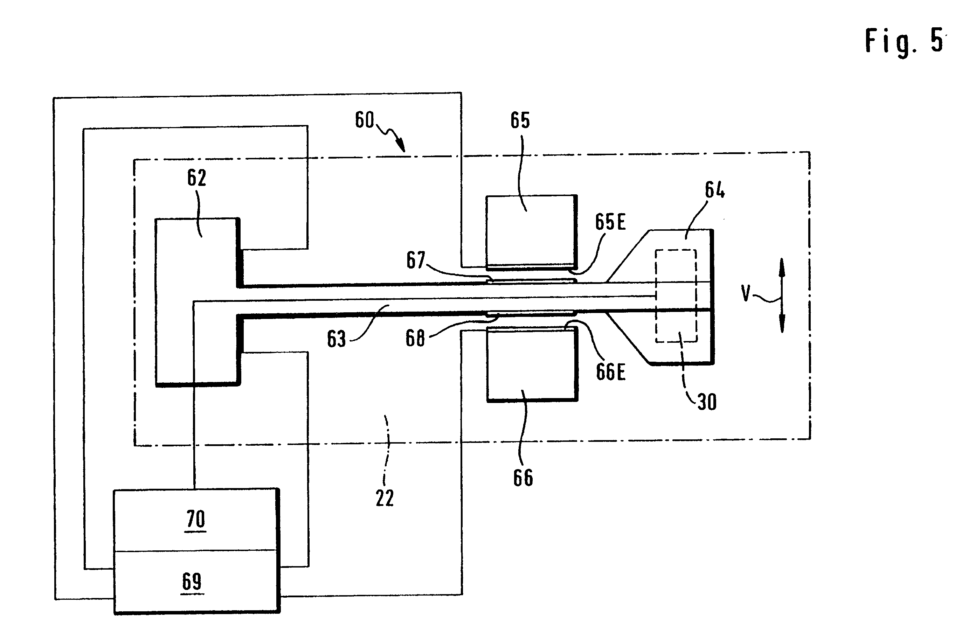

Bei dem Strahlablenkungssystem 60 für die Laserstrahlungsquelle 30 ist, wie in Fig. 5 dargestellt, ebenfalls ein Lagerblock 62 vorgesehen, welcher fest mit dem jeweiligen Teil der Grundplatte 22 verbunden ist und von welchem sich ausgehend ein Arm 63, in diesem Fall quer zur vertikalen Richtung V, erstreckt, welcher an seinem vorderen Ende eine Trägerplatte 64 trägt, auf welcher die Laserstrahlungsquelle 30 sitzt. Auch bei dem Strahlablenkungssystem 60 sind der Arm und die Trägerplatte 64 frei gegenüber der Grundplatte 22 beweglich, und aufgrund seiner Materialelastizität ist der Arm 63 ebenfalls ausgehend von der Ausgangslage in der vertikalen Richtung V sowohl nach unten als auch nach oben auslenkbar, und zwar gegen eine aufgrund der Materialelastizität auftretende Rückstellkraft.

Zum Auslenken des Arms sind bei dem Strahlablenkungssystem 60 in gleicher Weise wie beim Strahlablenkungssystem 50 nahe der Trägerplatte 64 beiderseits des Arms 63 Elektroden 65 und 66 vorgesehen, welche mit Elektrodenflächen 65E und 66E dem Arm 63 zugewandt sind, der seinerseits eine der Elektrode 65 zugewandte Elektrode 67 und eine der Elektrode 66 zugewandte Elektrode 68 trägt.

Auch die Elektroden 65 und 67 sowie 66 und 68 sind mit einer Ablenksteuerung 69 verbunden, welche in gleicher Weise wie die Ablenksteuerung 29 des Strahlablenkungssystems 50 und durch jeweils größere Spannung in der Lage ist, den Arm 65 sowohl nach oben oder nach unten mehr oder weniger stark von der Ausgangsstellung ausgehend auszulenken und somit die Laserstrahlungsquelle 30 in vertikaler Richtung zu bewegen.

Durch Koordination der Auslenksteuerungen 59 und 69 der Strahlablenkungseinrichtung 48 miteinander besteht somit die Möglichkeit, eine zweidimensionale Relativbewegung der Laserstrahlungsquelle 30 und des Linsensystems 44 gegenüber der Teilbildfläche 14 zu erreichen, und zwar in zwei Dimensionen, so daß sich damit die Stärke und Richtung der Ablenkung des fokussierten Laserstrahlungsfeldes 34 bezüglich der einzelnen Bildpunkte 16 der Teilbildfläche 14 so variieren läßt, daß jeder der Bildpunkte 16 der Teilbildfläche 14 in einer bestimmten Reihenfolge ausleuchtbar ist.

Dieselbe Steuerung des fokussierten Laserstrahlungsfeldes 34 erfolgt für jede der Beleuchtungseinheiten 20', so daß damit jede der Beleuchtungseinheiten 20' in der Lage ist, sämtliche Bildpunkte 16 der dieser zugeordneten Teilbildfläche 14 innerhalb eines für den Bildaufbau vorgesehenen Zeitintervalls auszuleuchten.

Im einfachsten Fall sind alle Auslenksteuerungen 59 und 69 aller Beleuchtungseinheiten 20' miteinander synchronisiert, so daß alle Beleuchtungseinheiten 20' die Bildpunkte 16 der jeweiligen Teilbildfläche 14 in derselben Reihenfolge und mit derselben Taktfrequenz ausleuchten, d. h. daß zu einem bestimmten Zeitpunkt alle Beleuchtungseinheiten 20' einen speziellen Bildpunkt innerhalb der Reihenfolge in jeder der Teilbildflächen ausleuchten.

Soll jedoch ein Flimmern vermieden werden, so besteht die Möglichkeit, den Zeitraum für den Bildaufbau konstant zu lassen, die Auslenksteuerungen 59 und 69 der einzelnen Beleuchtungseinheiten 20' so zu betreiben, daß zwar mit derselben Taktfrequenz die Ausleuchtung eines Bildpunktes 16 zum nächsten Bildpunkt 16 wechselt, jedoch die Auslenksteuerungen 59 und 69 jeder der Beleuchtungseinheiten 20' zu Beginn des Intervalls bei unterschiedlichen Bildpunkten 16 innerhalb der einzelnen Teilbildflächen 14 starten, so daß zwar innerhalb des Intervalls und mit derselben Taktfrequenz alle Bildpunkte 16 der jeweiligen Teilbildfläche ausgeleuchtet werden, jedoch zur gleichen Zeit nicht jeweils die einander entsprechenden Bildpunkte 16 aller Teilbildflachen 14 gleichzeitig ausgeleuchtet werden.

Alternativ dazu ist es aber auch denkbar, die Ablenksteuerungen 59 und 69 jeder der Beleuchtungseinheiten 20' völlig unsynchronisiert relativ zu den anderen Beleuchtungseinheiten 20 arbeiten zu lassen, mit der einzigen Vorgabe, daß innerhalb des jeweiligen für den Bildaufbau vorgesehenen Intervalls alle Bildpunkte 16 einer Teilbildfläche 14 ausgeleuchtet werden. Damit kann ein "Flimmern" des Bildes 12 mit der Frequenz der Ausleuchtung der einzelnen Bildpunkte 16 vermieden werden.

Um die einzelnen Bildpunkte 16 jeder Teilbildfläche 14 unterschiedlich hell ausleuchten zu können ist ferner noch vorgesehen, daß die Auslenksteuerungen 59 und 69 noch gleichzeitig mit einer Helligkeitssteuerung 70 zusammenarbeiten, die die Laserstrahlungsquelle 30 betreibt und im einfachsten Fall durch Änderung des Speisestroms zur Laserstrahlungsquelle 30 die Intensität des von dieser ausgehenden Laserstrahlungsfeldes 32 entsprechend der gewünschten Helligkeit bei der Ausleuchtung des einzelnen Bildpunktes 16 variiert.

Da vorzugsweise mit den erfindungsgemäßen Strahlablenkungssystemen 50 und 60 nebeneinanderliegende Bildpunkte 16 einer Teilbildfläche 14 so ausgeleuchtet werden, daß zunächst eine Ausleuchtung aller Bildpunkte 16 einer beispielsweise in horizontaler Richtung H verlaufenden Reihe 18 erfolgt und dann eine Ausleuchtung der Bildpunkte 16 in der in vertikaler Richtung V darunter liegenden Reihe 18, ist die Geschwindigkeit, mit welcher die Strahlablenkung in der horizontalen Richtung H erfolgt, größer als die Geschwindigkeit der Ablenkung in der vertikalen Richtung V. Aus diesem Grund ist beispielsweise das Strahlablenkungssystem 50 so aufgebaut, daß die Auslenksteuerung 59 die Auslenkung des Trägerauges 54 in Form einer periodischen Schwingung betreibt, d. h., daß das Trägerauge 54 in der horizontalen Richtung H mit einer bestimmten Frequenz schwingt. Sollte dabei die von der Auslenksteuerung 59 aufgewandte Energie möglichst gering gehalten werden, wird der Arm so ausgebildet, daß die gewünschte Frequenz nahe der Resonanzfrequenz des Arms 53 liegt, so daß das durch das Trägerauge 50 mit dem Linsensystem 54 und dem Arm 53 gebildete "Pendel" im Bereich seiner Resonanzfrequenz schwingend betrieben wird.

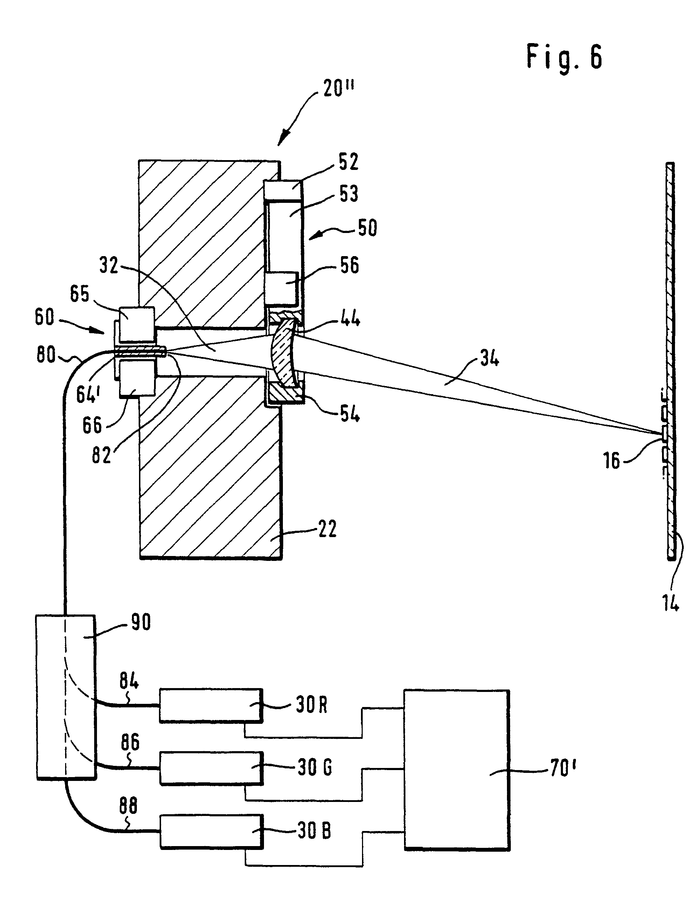

Bei einer dritten Ausführungsform einer erfindungsgemäßen Beleuchtungseinheit 20", dargestellt in Fig. 6, sind diejenigen Teile, die mit denen der vorangehenden Ausführungsform identisch sind, mit denselben Bezugszeichen versehen, so daß hinsichtlich der Beschreibung derselben auf die Ausführungen zur voranstehenden Ausführungsform vollinhaltlich Bezug genommen werden kann.

Im Gegensatz zur ersten Ausführungsform weist das Strahlablenkungssystem 60 keine Trägerplatte 64 mehr auf, sondern eine Aufnahme 64' für einen beweglichen Lichtleiter 80, der in der Aufnahme 64' gehalten ist und ein Ende als Strahlungsaustritt 82 aufweist, aus welchem das divergente Strahlungsfeld 32 in Richtung des Linsensystems 44 austritt.

Der Lichtleiter 80 ist dabei so ausgebildet, daß er mehrfarbiges, d. h. rotes, grünes und blaues Licht, in variierenden, teilweise unterschiedlichen Anteilen führt, welche durch beispielsweise stationär auf der Grundplatte 22 oder einem separaten stationären Träger angeordneten Laserstrahlungsquellen 30R, 30G und 30B erzeugt, in Lichtleiter 84, 86, 88 eingekoppelt werden und die zu einem als Ganzes mit 90 bezeichneten Kopplungselement führen, das seinerseits wiederum die Laserstrahlung in den Lichtleiter 80 einkoppelt.

Damit besteht die Möglichkeit, im Bereich des jeweiligen Bildpunktes 16 der jeweiligen Teilbildfläche 14 sowohl weißes als auch Licht jeder gewünschten Farbe in der bekannten Art und Weise zu erzeugen, wobei dazu die Helligkeitssteuerung 70' die Intensitäten des Laserlichts aller Laserstrahlungsquellen 30R, 30G und 30B gleichzeitig steuert.

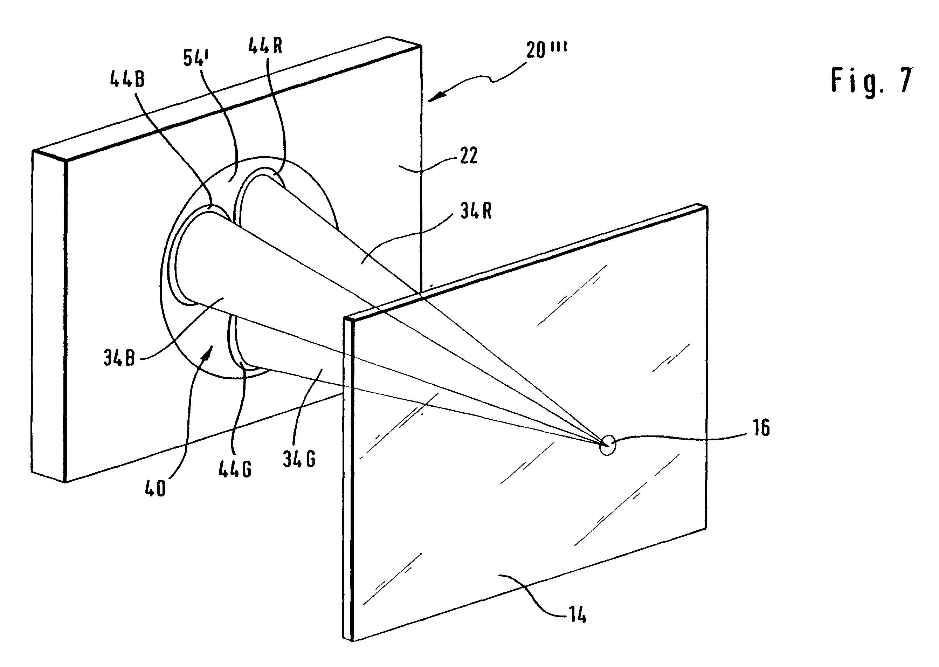

Bei einer vierten Ausführungsform einer erfindungsgemäßen Beleuchtungseinheit 20"', dargestellt in Fig. 7, ist ebenfalls die Möglichkeit zur Erzeugung farbiger Bildpunkte 16 in der jeweiligen Teilbildfläche 14 vorgesehen. Hierzu erzeugt jedoch die Beleuchtungseinheit drei fokussierte Laserstrahlungsfelder 34R, 34G und 34B, die jeweils von der Grundplatte 22 ausgehend auf den entsprechenden Bildpunkt 16 fokussiert werden. D. h., daß für jede Farbe eine zeichnerisch nicht dargestellte Laserstrahlungsquelle 30R, 30G und 30B vorgesehen ist, die räumlich nebeneinander angeordnet sind und denen jeweils ein Linsensystem 44R, 44G und 44B zugeordnet ist, das die divergente Laserstrahlung aus der jeweiligen Laserstrahlungsquelle auf den Bildpunkt 16 fokussiert.

Alle Linsensysteme 44R, 44G und 44B sind dabei in einem gemeinsamen Trägerauge 54' entsprechend dem Trägerauge 54 gehalten und beispielsweise ebenfalls entsprechend dem Trägerauge 54' mit einem Strahlablenkungssystem 50 bewegbar, wobei in Fig. 7 die entsprechende Strahlablenkungseinrichtung, die genau wie die Strahlablenkungseinrichtung 48 der dritten Ausführungsform arbeitet, nicht im einzelnen dargestellt ist.

Ferner sind auch alle Laserstrahlungsquellen 30R, 30G und 30B gemeinsam auf einer Trägerplatte 64 angeordnet und somit ebenfalls gemeinsam durch ein Strahlablenkungssystem entsprechend dem Strahlablenkungssystem 60 bewegbar.

Damit sind auch bei der vierten, in Fig. 7 dargestellten Ausführungsform die Bildpunkte 16 der Teilbildfläche farbig in der gleichen Weise, wie im Zusammenhang mit der zweiten Ausführungsform beschrieben, ausleuchtbar.

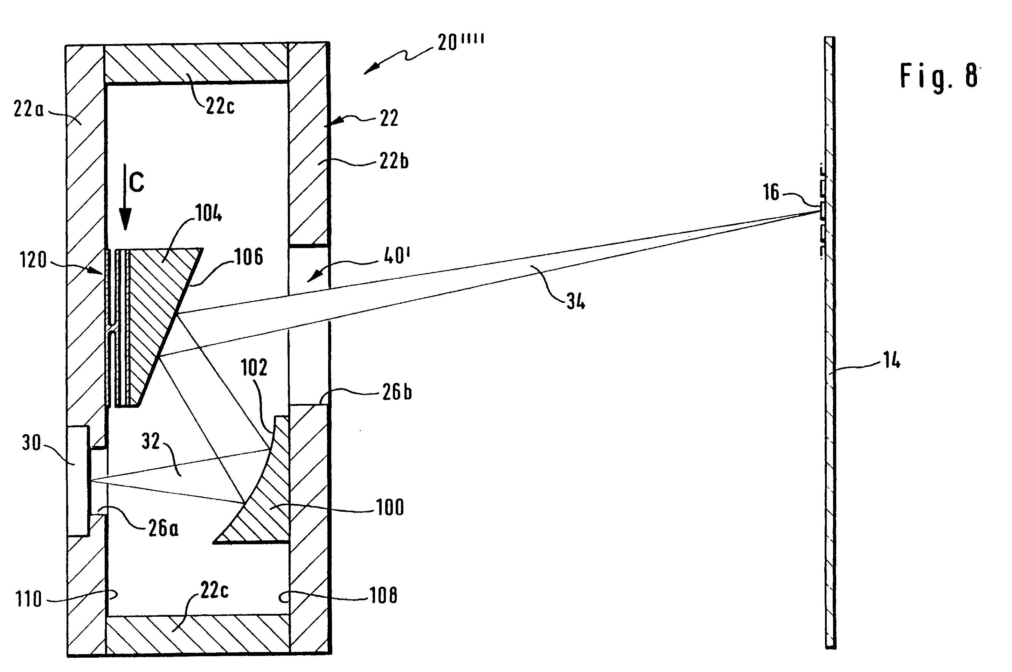

Bei einer fünften Ausführungsform einer erfindungsgemäßen Beleuchtungseinheit 20"" ist die Grundplatte 22 aus zwei Teilplatten 22a und 22b aufgebaut, die im Abstand, beispielsweise mittels Abstandshaltern 22c, voneinander angeordnet sind (Figuren 7 bis 10).

Dabei ist die Teilplatte 22b zwischen der Teilplatte 22a und der Teilbildfläche 14 vorgesehen.

Die Teilplatte 22a trägt eine Laserstrahlungsquelle 30, welche an dieser fest angeordnet ist. Beispielsweise weist die Teilplatte 22a einen Durchbruch 26a auf, durch welchen das divergente, von der Laserstrahlungsquelle 30 kommende Laserstrahlungsfeld 32 hindurchtritt. Das divergente Laserstrahlungsfeld 32 trifft auf einen fokussierenden Spiegel 100 mit einer konkav gekrümmten Spiegelfläche 102, welcher das divergente Strahlungsfeld 32 als fokussiertes Strahlungsfeld reflektiert, und zwar auf einen Umlenkspiegel 104 mit einer ebenen Spiegelfläche 106. Der fokussierende Spiegel 100 und der Umlenkspiegel 104 bilden die Abbildungsoptik 40'.

Der fokussierende Spiegel 100 sitzt dabei auf einer der Teilplatte 22a zugewandten Seite 108 der Teilplatte 22b und der Umlenkspiegel 104 auf einer der Teilplatte 22b zugewandten Seite 110 der Teilplatte 22a. Das vom Umlenkspiegel 104 reflektierte fokussierte Laserstrahlungsfeld 34 breitet sich in Richtung der Teilbildfläche 14 aus und durchsetzt dabei einen Durchbruch 26b in der Teilplatte 22b und trifft dann auf der Teilbildfläche 14 auf den auszuleuchtenden Bildpunkt 16.

Um nun eine Ablenkung des fokussierten Laserstrahlungsfeldes 34 zu erhalten, so daß alle Bildpunkte der Teilbildfläche 14 in der beschriebenen Art und Weise ausleuchtbar sind, ist zwischen dem Umlenkspiegel 104 und der Teilplatte 22a, die diesen trägt, eine Strahlablenkungseinrichtung 120 vorgesehen, welche zwei Strahlablenkungssysteme 130 und 140 aufweist.

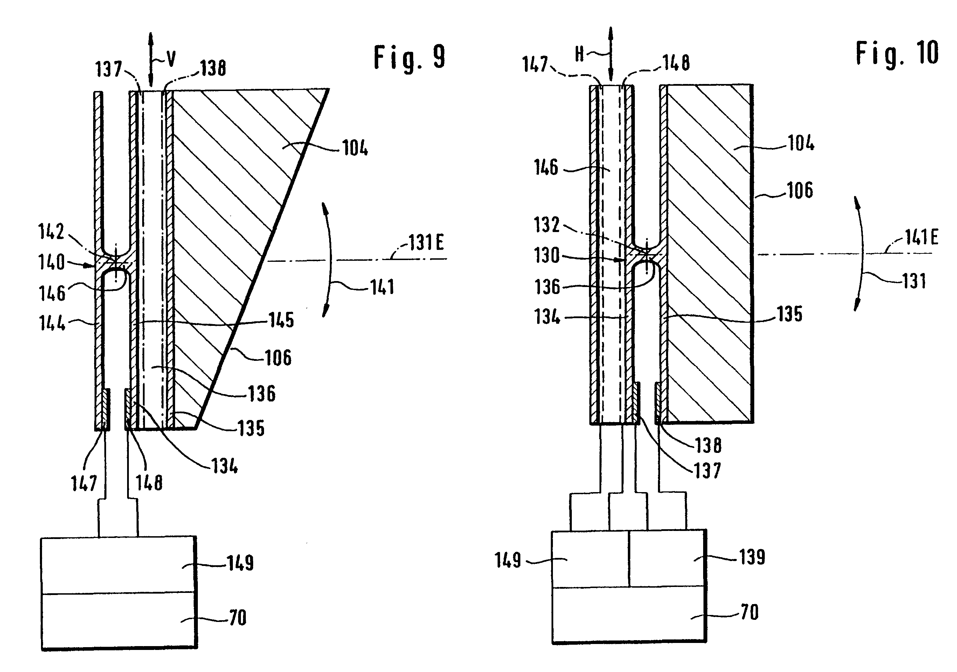

Das Strahlablenkungssystem 130, dargestellt in Fig. 10, dient dabei dazu, den Umlenkspiegel 104 um eine Achse 132 zu kippen, welche in vertikaler Richtung V verläuft, so daß durch eine Kippbewegung um die Achse 132 eine Schwenkbewegung des Umlenkspiegels 104 gemäß dem Pfeil 131 folgt, der in einer horizontalen Ebene 131E liegt.

Ferner ist durch das Strahlablenkungssystem 140 (Fig. 9) ein Kippen um eine horizontale Achse 142 möglich, so daß der Umlenkspiegel 104 eine Schwenkbewegung entsprechend dem Pfeil 141 durchführt, der in einer vertikalen Ebene 141E liegt.

Das Strahlablenkungssystem 130 umfaßt hierzu zwei im Abstand voneinander angeordnete plattenförmige Teile 134 und 135, die über einen Steg 136 miteinander verbunden sind, wobei der Steg 136 so ausgebildet ist, daß sich die plattenförmigen Teile 134 und 135 parallel zueinander erstrecken. Der Steg 136 ist dabei aus einem elastisch deformierbaren Material hergestellt, so daß die plattenförmigen Teile 134 und 135 unter Deformation des Stegs 136 eine Kippbewegung relativ zueinander durchführen können, wobei die plattenförmigen Teile 134 und 135 entweder aufeinander zu oder voneinander weg bewegbar sind. Dadurch wird die im Bereich des Stegs 136 liegende Kippachse 132 definiert.

Tragen dabei die plattenförmigen Teile 134 und 135 beispielsweise an einem von dem Steg abgewandten Endbereich Elektroden 137 und 138, die mit einer Auslenksteuerung 139 verbunden sind. Wird durch die Auslenksteuerung 139 an die einander zugewandten Elektroden 137 und 138 eine Spannung angelegt, so ist damit gegen die Rückstellkraft des elastisch deformierbaren Stegs 136 ein Verkippen der plattenförmigen Teile 134 und 135 in Richtung aufeinander zu möglich, so daß sich die Elektroden 137 und 138 einander annähern und somit ein Kippen um die Kippachse 132 bewirken, wobei die Größe der Kippbewegung von der angelegten Spannung an den Elektroden 137 und 138 abhängig ist, die mit zunehmender Kippbewegung um die Kippachse 132 aufgrund der zunehmenden Rückstellkraft des elastisch deformierbaren Stegs 136 ebenfalls größer wird.

Auch das Strahlablenkungssystem 140 (Fig. 9) umfaßt zwei parallel zueinander angeordnete plattenförmige Teile 144 und 145, wobei das plattenförmige Teil 145 mit dem plattenförmigen Teil 134 des Strahlablenkungssystems 130 zusammenfallen kann.

Auch diese plattenförmigen Teile 144 und 145 sind durch einen Steg 146 miteinander verbunden, welcher in horizontaler Richtung H verläuft und ebenfalls elastisch deformierbar ist, so daß durch die Kippbewegung der plattenförmigen Teile 144 und 145 relativ zueinander auch die Kippachse 142 definiert ist.

Auch diese plattenförmigen Teile sind in einem dem Steg gegenüberliegenden Endbereich mit einander zugewandten Elektroden 147 und 148 versehen, die über eine Auslenksteuerung 149 ansteuerbar sind, so daß durch Anlegen einer Spannung durch die Auslenksteuerung 149 und somit eine verschieden starke Anziehung zwischen den Elektroden 147 und 148 eine verschieden starke Kippung um die Kippachse 142 erzeugbar ist, der die elastische Rückstellkraft des Stegs 146 entgegenwirkt.

Ferner ist auch die vierte Ausführungsform der erfindungsgemäßen Beleuchtungseinheit 20"" mit einer Helligkeitssteuerung 70 für die Laserstrahlungsquelle 30 versehen, welche mit den Auslenksteuerungen 139 und 149 zusammenwirkt, um für jeden der ausgeleuchteten Bildpunkte 16 die Helligkeit festzulegen.

Im übrigen können die Auslenksteuerungen 139 und 149 in gleicher Weise arbeiten, wie die verschiedenen, im Zusammenhang mit den Auslenksteuerungen 59 und 69 beschriebenen Varianten.

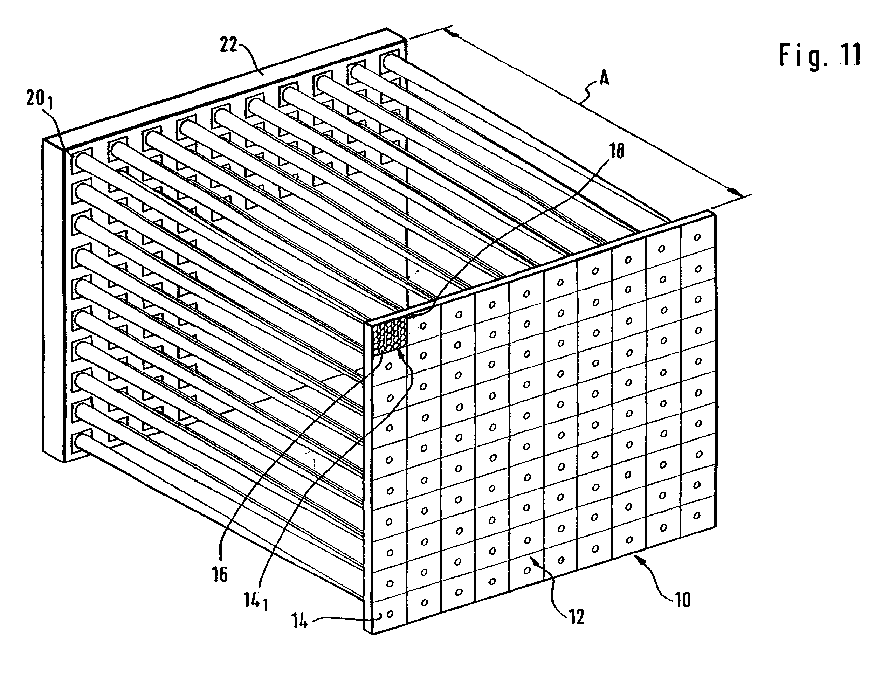

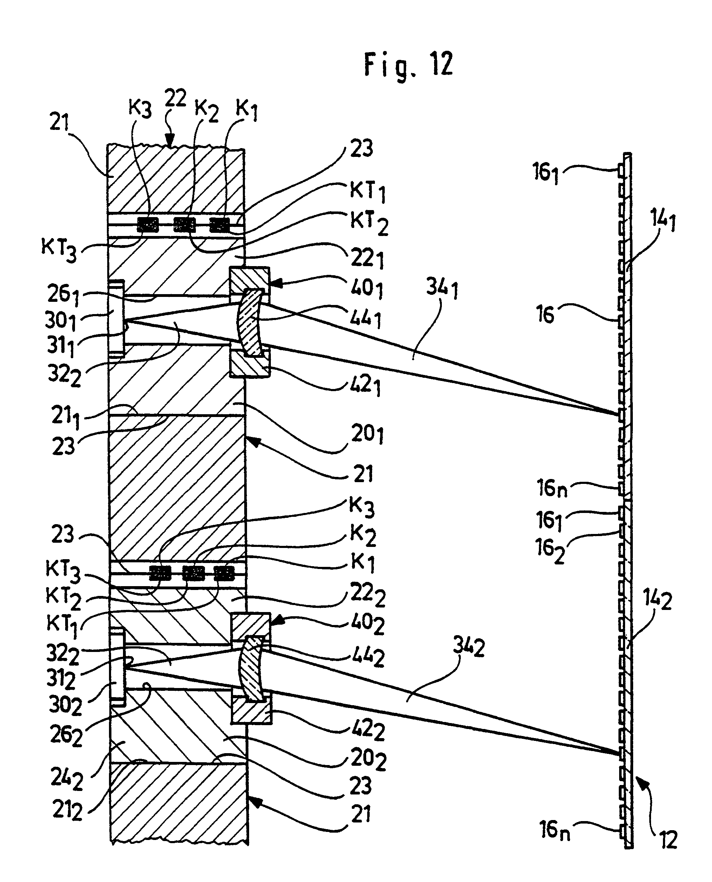

Bei einer sechsten Ausführungsform der erfindungsgemäßen Lösung, dargestellt in Fig. 11 und 12 sind diejenigen Teile, die mit denen der voranstehenden Ausführungsbeispielen, insbesondere des ersten Ausführungsbeispiels, identisch sind, mit denselben Bezugszeichen versehen.

Bei der sechsten Ausführungsform, dargestellt in Fig. 11 und 12, umfaßt die Grundplatte 22 einen Rahmen 21, in welchen die Grundplattenteile 22₁, 22₂ einsetzbar sind. Dabei bildet der Rahmen 21 Aufnahmen 21₁, 21₂, in welche die Grundplattenteile 22₁ als Einsetzkörper einsetzbar sind, wobei diese mit ihren Außenseiten 23 in den Aufnahmen 21₁, 21₂ anliegen.

Ferner sind vorzugsweise noch Kontaktelemente K₁ bis K₃ am Rahmen 21 vorgesehen, welche mit Kontaktelementen KT₁ bis KT₃ der Grundplattenteile 22₁, 22₂ in Verbindung bringbar sind, um eine Ansteuerung der einzelnen Beleuchtungseinheiten 20₁, 20₂ über in dem Rahmen 21 geführte Leiterbahnen in einfacher Weise realisieren zu können.

Im übrigen sind die Beleuchtungseinheiten 20₁, 20₂ in gleicher Weise aufgebaut und ausgebildet wie bei der ersten Ausführungsform oder einer der weiteren Ausführungsform, so daß auf deren Beschreibung vollinhaltlich Bezug genommen wird.

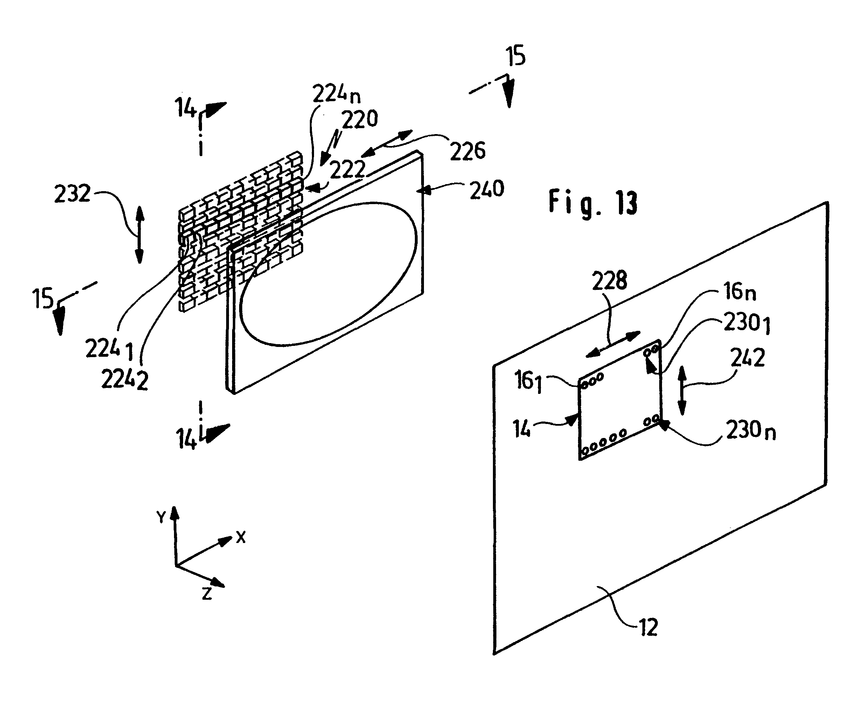

Bei einer siebten Ausführungsform der erfindungsgemäßen Lösung, dargestellt in Fig. 13, umfaßt jede Beleuchtungseinheit 220 eine Reihe 222 von Strahlaustrittsöffnungen 224₁ bis 224ₙ, wobei die Strahlaustrittsöffnungen 224₁ bis 224ₙ längs einer Richtung 226 aufeinanderfolgend angeordnet sind, die mit einer Richtung 228 zusammenfällt, in welcher die einzelnen Bildpunkte 16₁ bis 16ₙ aufeinanderfolgend angeordnet sind.

Die gesamte Reihe 122 von Strahlaustrittsöffnungen 224₁ bis 224ₙ wird auf eine entsprechende Bildpunktreihe 230 von Bildpunkten 16₁ bis 16ₙ mittels einer Abbildungsoptik 240 abgebildet, wobei diese jede einzelne Strahlaustrittsöffnung 224₁ auf einen entsprechenden Bildpunkt 16₁ der jeweiligen Reihe 230 abbildet, so daß jedem einzelnen Bildpunkt 16₁ bis 16ₙ einer der Strahlungsaustritte 224₁ bis 224ₙ ausschließlich zugeordnet ist.

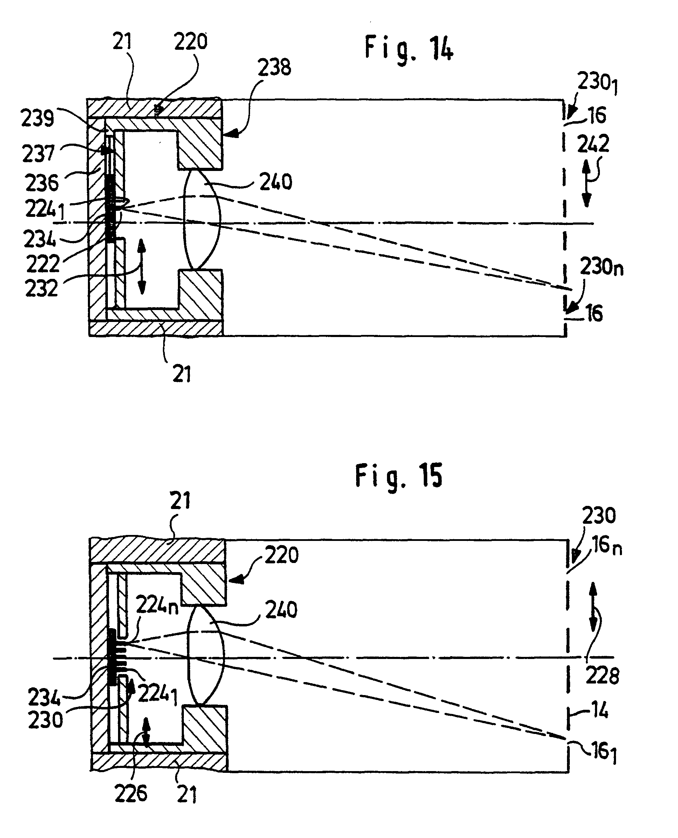

Vorzugsweise ist die Ausdehnung der Strahlungsaustritte 224₁ bis 224ₙ kleiner als die der entsprechenden Bildpunkte 16₁ bis 16ₙ und außerdem sind die Strahlungsaustritte 224₁ bis 224ₙ der Reihe 222 dichter beieinander angeordnet, so daß insgesamt die Reihe 222 in der Richtung 226 eine geringere Erstreckung aufweist als die jeweilige Reihe 230 von Bildpunkten 16₁ bis 16ₙ. Dies erlaubt einzelne Beleuchtungseinheiten 220 in gleicher Weise wie bei der sechsten Ausführungsform in einen Rahmen 21 nebeneinander einzusetzen, wie in Fig. 14 und 15 dargestellt.

Da, wie in Fig. 15 dargestellt, die Abbildungsoptik 240 alle Strahlungsaustritte 224₁ bis 224ₙ gleichzeitig auf die Teilbildflache 14 abbildet, sind durch die Reihe 222 von Strahlungsaustritten 224₁ bis 224ₙ alle Bildpunkte 16₁ bis 16ₙ der Bildpunktreihe 230 in der Richtung 228 gleichzeitig erzeugbar.

Um nun auch die quer zur Richtung 228 vorliegende Vielzahl von Bildpunkten 16 auszuleuchten ist, wie in Fig. 14 anhand der Bildpunkte 16₁ bis 16ₙ dargestellt, die gesamte Reihe 222 von Strahlungsaustritten, in diesem Fall exemplarisch der Strahlungsaustritts 124₁, in einer Richtung 232 quer zur Richtung 226 verschiebbar, wobei hierzu beispielsweise die Reihe von Strahlungsaustritten 224₁ bis 224ₙ auf einem Träger 234 angeordnet ist, welcher verschiebbar gegenüber einer Grundplatte 236 in eine Führung 237 eines Gehäuses 238 der Beleuchtungseinheit 220 geführt und mittels eines Antriebs 239 angetrieben ist, wobei der Träger 234, die Führung 237 und der Antrieb 239 eine Strahlablenkungseinrichtung 241 bilden.

Hierzu ist beispielsweise ein oszillierender Antrieb 239 vorgesehen, wie er im Zusammenhang mit den voranstehenden Ausführungsbeispielen exemplarisch beschrieben ist, wobei dieser Antrieb beispielsweise den Träger 234 periodisch schwingend in Richtung 232 relativ zur Abbildungsoptik 240 bewegt.

Durch diese Verschiebung der in Fig. 13 fett dargestellten Reihe 222 in die in Fig. 13 gestrichelt angeordneten Stellungen ist es möglich, nacheinander in einer Richtung 242 sämtliche Reihen 230₁ bis 230ₘ von Bildpunkten 16 mit einer periodisch wiederkehrenden Folge auszuleuchten.

Der Vorteil dieser Lösung ist darin zu sehen, daß bei dieser ein einziger oszillierender Antrieb 239 ausreichend ist, um sämtliche Bildpunkte 16 der Teilbildfläche 14 auszuleuchten, so daß der besonders einfach zu betreibende oszillierender Antrieb 239 ausreicht und die Notwendigkeit eines statisch arbeitenden Antriebs zusätzlich zu einem oszillierenden Antrieb entfällt.

Vorzugsweise ist dabei die Richtung 232, in welcher der Träger 234 bewegbar ist, die vertikale Richtung, während die Richtung 226 die horizontale Richtung ist.

Die Strahlungsaustritte 224₁ bis 224ₙ können Strahlungsaustritte für beispielsweise durch Lichtleiter an diese herangeführte Strahlung sein. Es ist aber auch im einfachsten Fall denkbar, eine Reihe n von Halbleiterstrahlungsquellen nebeneinander anzuordnen, deren Austrittsöffnungen die Strahlungsaustritte 224₁ bis 224ₙ bilden um diese Reihe auf den Träger 234 in Richtung 232 oszillierend zu bewegen.

Soll farbiges Licht erzeugt werden, wäre es beispielsweise denkbar, so, wie im Zusammenhang mit der dritten Ausführungsform in Fig. 6 beschrieben, die Strahlung mit den unterschiedlichen Weißlicht ergebenden Farben vor den Strahlungsaustritten 224₁bis 224ₙ zu mischen.

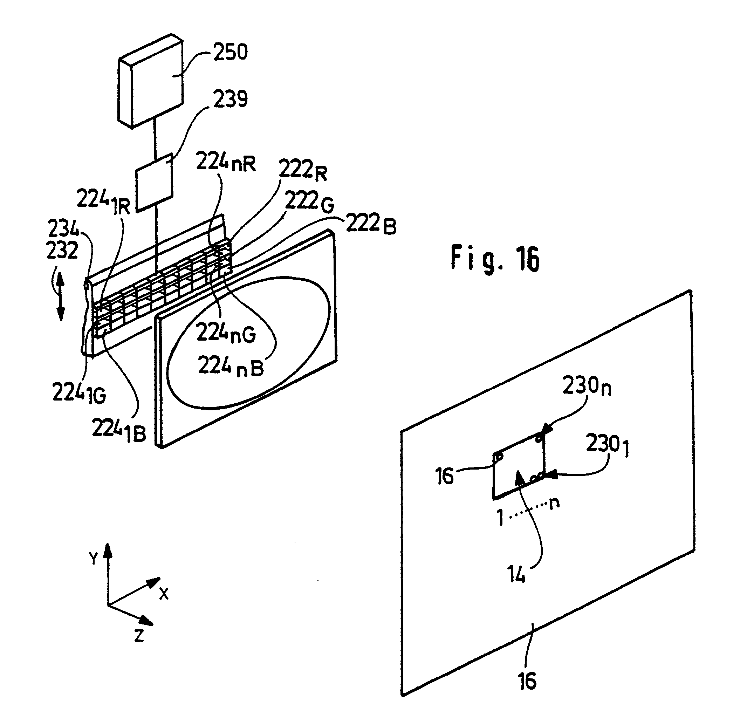

Es ist aber auch denkbar, wie im Rahmen einer achten Ausführungsform, dargestellt in Fig. 16 beschrieben, drei Reihen 222_{R}, 222_{G} und 222_{B} von Halbleiterstrahlungsquellen vorzusehen, wobei die Reihe 222_{R} eine Vielzahl von Strahlungsaustritten 224_{1R} bis 224_{nR} aufweist, die beispielsweise alle Austrittsöffnungen von Halbleiterstrahlungsquellen für rotes Licht darstellen. In gleicher Weise umfaßt die Reihe 222_{G} eine Vielzahl von Strahlungsaustritten 224_{1G} bis 224_{nG}, aus denen allen grünes Licht, beispielsweise von Halbleiterstrahlungsquellen austritt.

Schließlich umfaßt die Reihe 222_{B} eine Vielzahl von Strahlungsaustritten 224_{1B} bis 224_{nB} aus denen blaues Licht austritt und die ebenfalls einzelnen Halbleiterstrahlungsquellen zur Erzeugung von blauem Licht zugeordnet sind.

Alle drei Reihen 222_{R}, 222_{G} und 222_{B} sitzen in gleicher Weise wie bei der siebten Ausführungsform auf dem gemeinsamen Träger 234 und werden mit diesem in der Richtung 232 vorzugsweise oszillierend bewegt, um sämtliche Bildpunkte 16 der Teilbildfläche 14 auszuleuchten und zwar jeweils mit der entsprechenden Farbe oder der entsprechend gemischten Farbe, wobei die Erzeugung einer Mischfarbe durch zeitlich nicht kongruent einfallende Strahlung der unterschiedlichen Farben rot, grün und blau möglich ist, so daß die einzelne Reihe 222 der Reihen 222_{R}, 222_{G} und 222_{B} stets dann aktiviert wird, wenn die Abbildungsoptik 240 gerade diese Reihe 230 der Vielzahl von Reihen 230₁ bis 230ₘ abbildet.

Hierzu ist vorzugsweise eine Steuerung 250 vorgesehen, welche einen Antrieb 239 zum Bewegen der Reihen 222_{R}, 222_{G} und 222_{B} steuert.

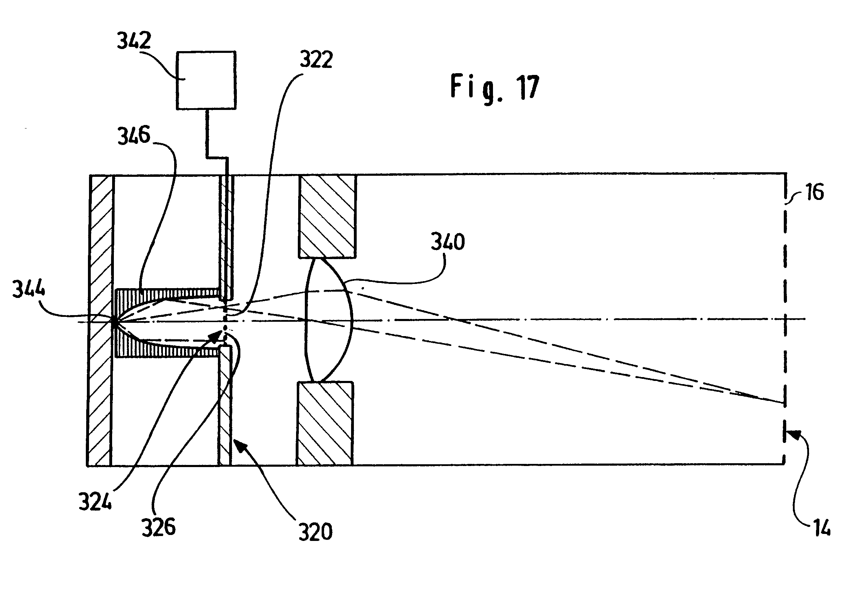

Bei einer neunten Ausführungsform einer erfindungsgemäßen Einrichtung, dargestellt in Fig. 17, umfaßt die Bleuchtungseinrichtung 320 eine Matrix 322 aus n x m Modulationselementen 324, welche in der Lage sind, Licht in Transmission hinsichtlich der Intensität zu modulieren. Jedes dieser Modulationselemente 324 ist beispielsweise ein LCD-Element mit welchem eine Intensitätssteuerung von transmittiertem Licht möglich ist.

Jedes dieser Modulationselemente 324 weist eine Lichtaustrittsöffnung 326 auf, welche den Strahlungsaustritt bildet, der seinerseits von einer Abbildungsoptik 340 auf die Teilbildfläche 14 abgebildet wird, wobei die Teilbildfläche 14 ebenfalls n x m Bildpunkte 16 aufweist und jeder der Bildpunkte 16 einem Strahlungsaustritt 326 durch die Abbildungsoptik 340 eindeutig zugeordnet ist.

Jedes dieser Modulationselemente 324 ist durch eine Steuerung 342 ansteuerbar, und moduliert die beispielsweise aus einer Halbleiterstrahlungsquelle 344 kommende Intensität der Strahlung, wobei die Strahlung aus der Halbleiterstrahlungsquelle 344 vorzugsweise mittels eines Reflektors 346 zu der Matrix 322 von Modulationselementen 324 hin reflektiert wird, um möglichst viel Intensität an den Strahlungsaustritten 326 zur Verfügung zu haben.

Je nach der gewünschten Anordnung von ausgeleuchteten Bildpunkten 16 ist es dabei möglich, die einzelnen Modulationselemente 324 so anzusteuern, daß die genau diesen eindeutig zugeordneten Bildpunkte 16 ausgeleuchtet und die übrigen Bildpunkte 16 nicht ausgeleuchtet werden.

Soll bei der neunten Ausführungsform, dargestellt in Fig. 17 eine farbige Ausleuchtung der Bildpunkte 16 erfolgen, so ist vorzugsweise vorgesehen, daß die Halbleiterstrahlungsquelle 344 durch drei die verschiedenen Farben rot, grün und blau liefernde Halbleiterstrahlungsquellen ersetzt wird, die nacheinander die Bildpunkte 16 ausleuchten, wobei die Farbmischung in den Bildpunkten 16 selbst aufgrund der durch das Auge vorgenommenen Mischung dreier aufeinanderfolgender Ausleuchtungen der Bildpunkte 16 mit den Farben rot, grün und blau erfolgt, die durch das Auge eines Betrachters den Eindruck der Mischung dieser drei Farben ergeben, sofern die Ausleuchtung mit den drei Farben rot, grün und blau schnell genug hintereinander erfolgt.

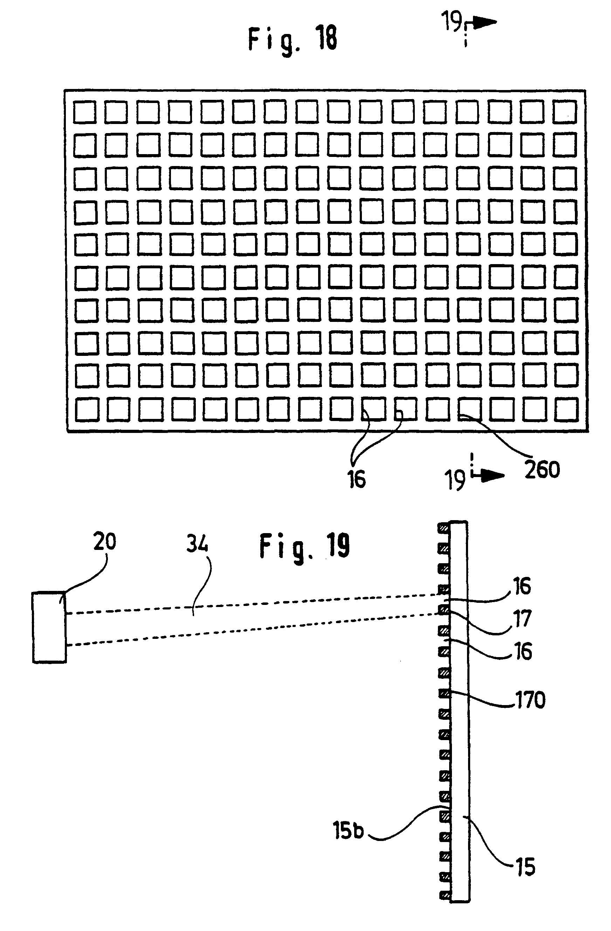

Eine bevorzugte Ausbildung einer Bildfläche 12 sieht, wie in Fig. 18 und 19 dargestellt vor, daß zwischen den einzelnen für die Bildpunkte 16 vorgesehenen Durchtrittsöffnungen Stege 17 angeordnet sind, welche eine einem Betrachter zugewandten schwarze Oberfläche 17o aufweisen und somit den Kontrast zwischen den Bildpunkten 16 verstärken.

Vorzugsweise sind diese Stege 17 hinter einer die Bildfläche 12 definierenden transparenten Platte 15, die auf ihrer von der jeweiligen Beleuchtungseinheit 20 beleuchteten Seite 15b diffus streuend ausgebildet ist.

Die Stege 17 haben außerdem die vorteilhafte Eigenschaft, daß Positionierungsfehler des von der jeweiligen Beleuchtungseinheit 20 kommenden fokussierten Strahlungsfeldes 34 eliminiert werden, indem das fokussierte Strahlungsfeld 34 einen Querschnitt aufweist, welcher größer als der Querschnitt des Bildpunktes 16 ist, so daß selbst bei geringen Positionierungsfehlern des fokussierten Strahlungsfeldes 34 stets der Bildpunkt 16 ausgeleuchtet ist, der übrige Teil der Strahlung dieses fokussierten Strahlungsfeldes jedoch auf die Stege 17 auftrifft.

Damit erscheint der Bildpunkt 16 für den Betrachter stets exakt an demselben Ort, unabhängig davon, welchen Positionierungsfehlern das fokussierte Strahlungsfeld 34 unterliegt, solange die Positionierungsfehler so gering sind, daß nicht der nächstliegende Bildpunkt 16 von dem Strahlungsfeld ausgeleuchtet wird.

Vorzugsweise sind dabei die Stege 17 zu einer Maske 260 zusammengefügt, die für den Betrachter einen Hintergrund liefert, der den Kontrast zwischen den einzelnen Bildpunkten 16 verstärkt.

## Patentansprüche

1. Einrichtung zur Erzeugung eines Bildes auf einer Bildfläche mit N x M einzeln ausleuchtbaren Bildpunkten, umfassend eine Vielzahl von Halbleiterstrahlungsquellen, von denen jede Strahlung mit mindestens einer Farbe erzeugt, eine Abbildungsoptik mit einer Strahlführung, durch welche mit jeder der Halbleiterstrahlungsquellen eine Mehrzahl von Bildpunkten ausleuchtbar ist,
**dadurch gekennzeichnet, daß** die Bildfläche (12) in eine Vielzahl von zusammenhängenden Teilbildflächen (14), umfassend jeweils ein zweidimensionales Ensemble von Bildpunkten (16), aufgeteilt ist, daß jeder der Teilbildflächen (14) eine Beleuchtungseinheit (20, 220, 320) zugeordnet ist und daß jede Beleuchtungseinheit (20, 220, 320) mindestens eine Halbleiterstrahlungsquelle (30) und mindestens eine dieser Beleuchtungseinheit (20, 220, 230) zugeordnete eigene Abbildungsoptik (40, 240, 340) aufweist, welche einen Strahlungsaustritt (31, 82, 224, 326) in freier Strahlausbreitung auf die entsprechende Teilbildfläche (14) abbildet.

2. Einrichtung nach Anspruch 1, **dadurch gekennzeichnet, daß** die Beleuchtungseinheiten (20, 220, 320) identisch ausgebildet sind.

3. Einrichtung nach Anspruch 2, **dadurch gekennzeichnet, daß** die Beleuchtungseinheiten (20, 220, 320) identisch aufgebaute und identisch ansteuerbare Module (20, 220, 320) sind.

4. Einrichtung nach einem der voranstehenden Ansprüche, **dadurch gekennzeichnet, daß** die Beleuchtungseinheiten (20, 220, 320) in einer zur Bildfläche (12) ungefähr parallel verlaufenden Fläche angeordnet sind.

5. Einrichtung nach einem der voranstehenden Ansprüche, **dadurch gekennzeichnet, daß** die Beleuchtungseinheiten (20, 220, 320) an einem Träger (21) angeordnet sind.

6. Einrichtung nach Anspruch 5, **dadurch gekennzeichnet, daß** die Beleuchtungseinheiten (20, 220, 320) mit identischen Haltekörpern (23) versehen und mit diesen in entsprechenden Aufnahmen (21₁, 21₂) am Träger (21) gehalten sind.

7. Einrichtung nach einem der voranstehenden Ansprüche, **dadurch gekennzeichnet, daß** die Bildfläche (12) aus Gruppen von Teilbildflächen (14) gleicher Größe aufgebaut ist.

8. Einrichtung nach einem der voranstehenden Ansprüche, **dadurch gekennzeichnet, daß** die Bildfläche (12) Teilbildflächen (14) identischer Größe aufweist.

9. Einrichtung nach einem der voranstehenden Ansprüche, **dadurch gekennzeichnet, daß** die Teilbildflächen (14) in den beiden die Bildfläche (12) aufspannenden und quer zueinander verlaufenden Richtungen (H, V) Maximalerstreckungen aufweisen, die in der gleichen Größenordnung sind.

10. Einrichtung nach Anspruch 9, **dadurch gekennzeichnet, daß** die Maximalerstreckungen ungefähr gleich groß sind.

11. Einrichtung nach einem der voranstehenden Ansprüche, **dadurch gekennzeichnet, daß** alle Bildpunkte (16) einer Teilbildfläche (14) unmittelbar nebeneinander liegen.

12. Einrichtung nach einem der voranstehenden Ansprüche, **dadurch gekennzeichnet, daß** jede Beleuchtungseinheit (20) eine dieser zugeordnete Strahlablenkungseinrichtung (48, 120, 241) aufweist.

13. Einrichtung nach Anspruch 12, **dadurch gekennzeichnet, daß** mit der Strahlablenkungseinrichtung (48, 120, 241) eine Relativbewegung des aus jeder Beleuchtungseinheit (20) austretenden Strahlungsfeldes zu den Bildpunkten (16) der Teilbildfläche (14) in mindestens einer Richtung erzeugbar ist.

14. Einrichtung nach Anspruch 12 oder 13, **dadurch gekennzeichnet, daß** mit der Strahlablenkungseinrichtung (48, 120) mindestens eine optische Komponente (30, 40, 80, 104, 222) der Beleuchtungseinheit (20) relativ zur Teilbildfläche (14) bewegbar ist.

15. Einrichtung nach Anspruch 14, **dadurch gekennzeichnet, daß** mit der Strahlablenkungseinrichtung (48, 241) ein Strahlungsaustritt (31, 82, 224) des Strahlungsfeldes (32) aus der Halbleiterstrahlungsquelle (30) relativ zu der Teilbildfläche (14) bewegbar ist.

16. Einrichtung nach Anspruch 14 oder 15, **dadurch gekennzeichnet, daß** mindestens eine Komponente (44, 104) der Abbildungsoptik (40) bewegbar ist.

17. Einrichtung nach einem der Ansprüche 12 bis 16, **dadurch gekennzeichnet, daß** die Strahlablenkungseinrichtung (48, 120, 241) mindestens einen mikromechanischen Antrieb umfaßt.

18. Einrichtung nach Anspruch 17, **dadurch gekennzeichnet, daß** die Strahlablenkungseinrichtung (48, 120) zwei in quer zueinander verlaufende Richtungen wirksame Antriebe (50, 60, 130, 140) umfaßt.

19. Einrichtung nach Anspruch 17 oder 18, **dadurch gekennzeichnet, daß** der Antrieb (50, 60, 239) als Verschiebeantrieb ausgebildet ist.

20. Einrichtung nach Anspruch 19, **dadurch gekennzeichnet, daß** der Antrieb (50, 60) einen Führungsarm (53, 63) aufweist, welcher an einem Ende die zu verschiebende optische Komponente (44, 30, 80) der Beleuchtungseinheit (20) trägt und am anderen Ende fest angeordnet ist.

21. Einrichtung nach Anspruch 20, **dadurch gekennzeichnet, daß** der Führungsarm (53, 63) durch ein elektrisches Feld auslenkbar ist.

22. Einrichtung nach Anspruch 20 oder 21, **dadurch gekennzeichnet, daß** der Führungsarm (53, 63) als federelastisches Element ausgebildet ist.

23. Einrichtung nach einem der Ansprüche 17 oder 18, **dadurch gekennzeichnet, daß** der Antrieb als Kippantrieb (130, 140) ausgebildet ist.

24. Einrichtung nach Anspruch 23, **dadurch gekennzeichnet, daß** der Kippantrieb zwei um eine Kippachse (132, 142) relativ zueinander verkippbare Trägerelemente (134, 135, 144, 145) aufweist.

25. Einrichtung nach Anspruch 24, **dadurch gekennzeichnet, daß** die Trägerelemente (134, 135, 144, 145) durch einen elastisch deformierbaren Materialsteg (136, 146) verbunden sind.

26. Einrichtung nach einem der Ansprüche 24 oder 25, **dadurch gekennzeichnet, daß** die Trägerelemente (134, 135, 144, 145) relativ zueinander durch ein elektrisches Feld bewegbar sind.

27. Einrichtung nach einem der Ansprüche 17 bis 26, **dadurch gekennzeichnet, daß** der Antrieb (60, 140) als statischer einstellbarer Antrieb ausgebildet ist.

28. Einrichtung nach einem der Ansprüche 17 bis 27, **dadurch gekennzeichnet, daß** ein Antrieb (50, 130, 239) als Schwingantrieb ausgebildet ist.

29. Einrichtung nach Anspruch 28, **dadurch gekennzeichnet, daß** der Schwingantrieb (50, 130, 239) nahe seiner Resonanzfrequenz arbeitet.

30. Einrichtung nach einem der voranstehenden Ansprüche, **dadurch gekennzeichnet, daß** jede Beleuchtungseinheit (220, 320) eine Reihe (222) von Strahlungsaustritten (224) aufweist, welche die Abbildungsoptik (240) gleichzeitig auf eine Bildpunktreihe der Teilbildfläche (14) abbildet.

31. Einrichtung nach Anspruch 30, **dadurch gekennzeichnet, daß** die Zahl der Strahlungsaustritte (224) der Reihe (222) der Zahl von Bildpunkten (16) der Bildpunktreihe (230) in einer zu der Reihe (222) parallelen Richtung (228) der entsprechenden Teilbildfläche (14) entspricht, und daß die Ausleuchtung der Teilbildflächen (14) durch eine Strahlablenkungseinrichtung (241) in Richtung quer zu der Reihe (222) erfolgt.

32. Einrichtung nach Anspruch 30 oder 31, **dadurch gekennzeichnet, daß** die Ausdehnung der Reihe (222) von Strahlungsaustritten (224) in Richtung ihrer Längsrichtung (226) kleiner ist als die Ausdehnung der entsprechenden Bildpunktreihe (230) in dieser Richtung (228).

33. Einrichtung nach einem der Ansprüche 30 bis 32, **dadurch gekennzeichnet, daß** jede Beleuchtungseinheit (220) drei Reihen (222_{R}, 222_{G}, 222_{B}) von Strahlungsaustritten (224_{R}, 224_{G} 224_{B}) aufweist.

34. Einrichtung nach Anspruch 33, **dadurch gekennzeichnet, daß** jede der Reihen (222_{R}, 222_{G}, 222_{B}) von Strahlungsaustritten (224_{R}, 224_{G}, 224_{B}) Strahlung einer von drei zu Weißlicht überlagerbaren Farben austritt.

35. Einrichtung nach Anspruch 33 oder 34, **dadurch gekennzeichnet, daß** jede der verschiedenen Reihen (222_{R}, 222_{G}, 222_{B}) von Strahlungsaustritten (224_{R}, 224_{G}, 224_{B}) über eine Steuerung (250) zeitlich getrennt aktivierbar ist.

36. Einrichtung nach einem der voranstehenden Ansprüche, **dadurch gekennzeichnet, daß** jedem Strahlungsaustritt (31, 82, 224, 326) mindestens eine Halbleiterstrahlungsquelle zugeordnet ist.

37. Einrichtung nach einem der voranstehenden Ansprüche 1 bis 11, **dadurch gekennzeichnet, daß** die Beleuchtungseinheit (320) mindestens eine Reihe von Strahlung in Transmission modulierenden Modulationselementen (324) aufweist, dessen jeweilige Lichtaustrittsflächen die Strahlungsaustritte (326) bilden, welche die Abbildungsoptik (340) gemeinsam auf die Teilbildfläche (14) abbildet.

38. Einrichtung nach Anspruch 37, **dadurch gekennzeichnet, daß** die Beleuchtungseinheit (320) eine zweidimensionale Matrix (322) von Modulationselementen (324) aufweist, welche eine zweidimensionale Matrix von Strahlungsaustritten (326) bildet.

39. Einrichtung nach Anspruch 38, **dadurch gekennzeichnet, daß** die Zahl der Modulationselemente (324) der Matrix (322) der Zahl der Bildpunkte (16) in der entsprechenden Teilbildfläche (14) entspricht.

40. Einrichtung nach einem der Ansprüche 37 bis 39, **dadurch gekennzeichnet, daß** die Modulationselemente (324) Lichteintrittsflächen aufweisen, welche die mindestens eine Halbleiterstrahlungsquelle (344) ausleuchtet.

41. Einrichtung nach Anspruch 40, **dadurch gekennzeichnet, daß** die mindestens eine Halbleiterstrahlungsquelle (344) die Lichteintrittsflächen aller Modulationselemente (324) einer Beleuchtungseinheit (320) ausleuchtet.

42. Einrichtung nach einem der voranstehenden Ansprüche, **dadurch gekennzeichnet, daß** jede Beleuchtungseinheit (20, 220, 320) mindestens drei Halbleiterstrahlungsquellen umfaßt, welche Strahlung in drei verschiedene zu Weißlicht überlagerbaren Farben erzeugt.

43. Einrichtung nach Anspruch 42, **dadurch gekennzeichnet, daß** die Beleuchtungseinheit (20, 320) drei Halbleiterstrahlungsquellen zur Ausleuchtung jedes Strahlungsaustritts (31, 82, 326) aufweist, welche Strahlung in drei zu Weißlicht überlagerbaren Farben erzeugen.

44. Einrichtung nach Anspruch 42 oder 43, **dadurch gekennzeichnet, daß** die Strahlung mit den zu Weißlicht überlagerbaren Farben der Halbleiterstrahlungsquellen in einen Lichtleiter (80) eingekoppelt wird, welcher die die drei Farben umfassende Strahlung zu einem Strahlungsaustritt (31) führt.

45. Einrichtung nach einem der Ansprüche 1 bis 42, **dadurch gekennzeichnet, daß** jedem Bildpunkt (16) drei Strahlungsaustritte (44_{R}, 44_{G}, 44_{B}; 224_{R}, 224_{G}, 224_{B}) zugeordnet sind.

46. Einrichtung nach einem der Ansprüche 43 bis 45, **dadurch gekennzeichnet, daß** die drei Halbleiterstrahlungsquellen zu unterschiedlichen Zeitpunkten aktivierbar sind.

47. Einrichtung nach einem der voranstehenden Ansprüche, **dadurch gekennzeichnet, daß** die Halbleiterstrahlungsquelle als Halbleiterdiode ausgebildet ist.

48. Einrichtung nach Anspruch 47, **dadurch gekennzeichnet, daß** die Halbleiterdiode als resonante LED ausgebildet ist.

49. Einrichtung nach Anspruch 47, **dadurch gekennzeichnet, daß** die Halbleiterstrahlungsquelle als Laserstrahlungsquelle ausgebildet ist.

## Claims

1. Device for generating an image on an image surface with N x M individually illuminatable image elements, comprising a plurality of semiconductor radiation sources, each of said sources generating radiation with at least one colour, an optical imaging means with a beam guidance for illuminating a plurality of image elements with each of the semiconductor radiation sources, **characterized in that** the image surface (12) is divided into a plurality of interconnected image surface sections (14), each comprising a two-dimensional ensemble of image elements (16), that an illumination unit (20, 220, 320) is associated with each of the image surface sections (14), and that each illumination unit (20, 220, 320) has at least one semiconductor radiation source (30) and at least one optical imaging means (40, 240, 340) of its own associated with this illumination unit (20, 220, 230), said optical imaging means imaging a radiation outlet (31, 82, 224, 326) onto the corresponding image surface section (14) in a free beam propagation.

2. Device as defined in claim 1, **characterized in that** the illumination units (20, 220, 320) are of an identical design.

3. Device as defined in claim 2, **characterized in that** the illumination units (20, 220, 320) are identically constructed and identically controllable modules (20, 220, 320).

4. Device as defined in any one of the preceding claims, **characterized in that** the illumination units (20, 220, 320) are arranged in a surface extending approximately parallel to the image surface (12).

5. Device as defined in any one of the preceding claims, **characterized in that** the illumination units (20, 220, 320) are arranged on a support (21).

6. Device as defined in claim 5, **characterized in that** the illumination units (20, 220, 320) are provided with identical holding members (23) and held by these in corresponding receiving means (21₁, 21₂) on the support (21).

7. Device as defined in any one of the preceding claims, **characterized in that** the image surface (12) is constructed from groups of image surface sections (14) of equal size.

8. Device as defined in any one of the preceding claims, **characterized in that** the image surface (12) has image surface sections (14) of an identical size.

9. Device as defined in any one of the preceding claims, **characterized in that** the image surface sections (14) have maximum extensions in the same order of magnitude in the two directions (H, V) defining the image surface (12) and extending transversely to one another.

10. Device as defined in claim 9, **characterized in that** the maximum extensions are approximately of the same size.

11. Device as defined in any one of the preceding claims, **characterized in that** all the image elements (16) of one image surface section (14) are located immediately next to one another.

12. Device as defined in any one of the preceding claims, **characterized in that** each illumination unit (20) has a beam deflecting device (48, 120, 241) associated with it.

13. Device as defined in claim 12, **characterized in that** with the beam deflecting device (48, 120, 241) a relative movement of the radiation field exiting from each illumination unit (20) in relation to the image elements (16) of the image surface section (14) is generatable in at least one direction.

14. Device as defined in claim 12 or 13, **characterized in that** with the beam deflecting device (48, 120) at least one optical component (30, 40, 80, 104, 222) of the illumination unit (20) is movable relative to the image surface section (14).

15. Device as defined in claim 14, **characterized in that** with the beam deflecting device (48, 241) a radiation outlet (31, 82, 224) of the radiation field (32) from the semiconductor radiation source (30) is movable relative to the image surface section (14).

16. Device as defined in claim 14 or 15, **characterized in that** at least one component (44, 104) of the optical imaging means (40) is movable.

17. Device as defined in any one of claims 12 to 16, **characterized in that** the beam deflecting device (48, 120, 241) comprises at least one micromechanical drive.

18. Device as defined in claim 17, **characterized in that** the beam deflecting device (48, 120) comprises two drives (50, 60, 130, 140) operative in directions extending transversely to one another.

19. Device as defined in claim 17 or 18, **characterized in that** the drive (50, 60, 239) is designed as a displacement drive.

20. Device as defined in claim 19, **characterized in that** the drive (50, 60) has a guide arm (53, 63) supporting the optical component (44, 30, 80) of the illumination unit (20) to be displaced at one end and being securely arranged at the other end.

21. Device as defined in claim 20, **characterized in that** the guide arm (53, 63) is deflectable by means of an electric field.

22. Device as defined in claim 20 or 21, **characterized in that** the guide arm (53, 63) is designed as a spring-elastic element.

23. Device as defined in one of claims 17 or 18, **characterized in that** the drive is designed as a tilting drive (130, 140).

24. Device as defined in claim 23, **characterized in that** the tilting drive has two support elements (134, 135, 144, 145) tiltable relative to one another about an axis of tilt (132, 142).

25. Device as defined in claim 24, **characterized in that** the support elements (134, 135, 144, 145) are connected by means of an elastically deformable material web (136, 146).

26. Device as defined in one of claims 24 or 25, **characterized in that** the support elements (134, 135, 144, 145) are movable relative to one another by means of an electric field.

27. Device as defined in any one of claims 17 to 26, **characterized in that** the drive (60, 140) is designed as a static adjustable drive.

28. Device as defined in any one of claims 17 to 27, **characterized in that** one drive (50, 130, 239) is designed as an oscillating drive.

29. Device as defined in claim 28, **characterized in that** the oscillating drive (50, 130, 239) operates close to its resonance frequency.

30. Device as defined in any one of the preceding claims, **characterized in that** each illumination unit (220, 320) has a row (222) of radiation outlets (224) imaged by the optical imaging means (240) at the same time onto a row of imaging elements of the image surface section (14).

31. Device as defined in claim 30, **characterized in that** the number of radiation outlets (224) of the row (222) corresponds to the number of image elements (16) of the row (230) of image elements in a direction (228) of the corresponding image surface section (14) parallel to the row (222), and that the illumination of the image surface sections (14) is brought about by a beam deflecting device (241) in a direction transverse to the row (222).

32. Device as defined in claim 30 or 31, **characterized in that** the extension of the row (222) of radiation outlets (224) in the direction of its longitudinal direction (226) is smaller than the extension of the corresponding row (230) of image elements in this direction (228).

33. Device as defined in any one of claims 30 to 32, **characterized in that** each illumination unit (220) has three rows (222_{R}, 222_{G}, 222_{B}) of radiation outlets (224_{R}, 224_{G}, 224_{B}).

34. Device as defined in claim 33, **characterized in that** each of the rows (222_{R}, 222_{G}, 222_{B}) of radiation outlets (224_{R}, 224_{G}, 224_{B}) exits radiation of one of three colours superimposable to form white light.

35. Device as defined in claim 33 or 34, **characterized in that** each of the various rows (222_{R}, 222_{G}, 222_{B}) of radiation outlets (224_{R}, 224_{G}, 224_{B}) is activatable separately with respect to time via a control (250).

36. Device as defined in any one of the preceding claims, **characterized in that** at least one semiconductor radiation source is associated with each radiation outlet (31, 82, 224, 326).

37. Device as defined in any one of the preceding claims 1 to 11, **characterized in that** the illumination unit (320) has at least one row of modulation elements (324) modulating radiation in transmission, the respective light outlet areas of said elements forming the radiation outlets (326) imaged onto the image surface section (14) together by the optical imaging means (340).

38. Device as defined in claim 37, **characterized in that** the illumination unit (320) has a two-dimensional matrix (322) of modulation elements (324) forming a two-dimensional matrix of radiation outlets (326).

39. Device as defined in claim 38, **characterized in that** the number of modulation elements (324) of the matrix (322) corresponds to the number of image elements (16) in the corresponding image surface section (14).

40. Device as defined in any one of claims 37 to 39, **characterized in that** the modulation elements (324) have light entry areas illuminated by the at least one semiconductor radiation source (344).

41. Device as defined in claim 40, **characterized in that** the at least one semiconductor radiation source (344) illuminates the light entry areas of all the modulation elements (324) of one illumination unit (320).

42. Device as defined in any one of the preceding claims, **characterized in that** each illumination unit (20, 220, 320) comprises at least three semiconductor radiation sources generating radiation in three different colours superimposable to form white light.

43. Device as defined in claim 42, **characterized in that** the illumination unit (20, 320) has three semiconductor radiation sources for the illumination of each radiation outlet (31, 82, 326), said sources generating radiation in three colours superimposable to form white light.

44. Device as defined in claim 42 or 43, **characterized in that** the radiation with the colours of the semiconductor radiation sources superimposable to form white light is coupled into a light guide (80) guiding the radiation comprising the three colours to a radiation outlet (31).

45. Device as defined in any one of claims 1 to 42, **characterized in that** three radiation outlets (44_{R}, 44_{G}, 44_{B}; 224_{R}, 224_{G}, 224_{B}) are associated with each image element (16).

46. Device as defined in any one of claims 43 to 45, **characterized in that** the three semiconductor radiation sources are activatable at different points of time.

47. Device as defined in any one of the preceding claims, **characterized in that** the semiconductor radiation source is designed as a semiconductor diode.

48. Device as defined in claim 47, **characterized in that** the semiconductor diode is designed as a resonant LED.

49. Device as defined in claim 47, **characterized in that** the semiconductor radiation source is designed as a laser radiation source.

## Revendications

1. Dispositif pour former une image sur une surface d'image comportant N x M points d'image pouvant être éclairés individuellement, comprenant une multiplicité de sources de rayonnement à semiconducteurs, dont chacune produit un rayonnement d'au moins une couleur, un système optique de formation d'images incluant un guidage du rayonnement et grâce auquel chacune des sources de rayonnement à semiconducteurs peut éclairer une multiplicité de points d'image, **caractérisé en ce que** la surface d'image (12) est divisée en une multiplicité de surfaces d'image partielles adjacentes (14), comprenant chacune un ensemble bidimensionnel de points d'image (16), qu'à chacune des surfaces d'image partielles (14) est associée une unité d'éclairement (20, 220, 320) et que chaque unité d'éclairement (20, 220, 320) comporte au moins une source de rayonnement à semiconducteurs (30) et au moins un système optique de formation d'image (40, 240, 340) propre associé à cette unité d'éclairement (20, 220, 320) ce système optique de formation d'image forme l'image d'une sortie de rayonnement (31, 82, 224, 326) selon une propagation libre du rayonnement, sur la surface d'image partielle correspondante (14).

2. Dispositif selon la revendication 1, **caractérisé en ce que** les unités d'éclairement (20, 220, 320) sont identiques.

3. Dispositif selon la revendication 2, **caractérisé en ce que** les unités d'éclairement (20, 220, 320) sont des modules (20, 220, 320) agencés de façon identique et pouvant être commandés de façon identique.

4. Dispositif selon l'une des revendications précédentes, **caractérisé en ce que** les unités d'éclairement (20, 220, 320) sont disposées dans une surface qui s'étend approximativement parallèlement à la surface d'image (12).

5. Dispositif selon l'une des revendications précédentes, **caractérisé en ce que** les unités d'éclairement (20, 220, 320) sont disposées sur un support (21).

6. Dispositif selon la revendication 5, **caractérisé en ce que** les unités d'éclairement (20, 220, 320) sont pourvues de corps identiques de retenue (23) et sont retenues avec ces corps dans des logements correspondants (21₁, 21₂) situés dans le support (21).

7. Dispositif selon l'une des revendications précédentes, **caractérisé en ce que** la surface d'image (12) est constituée par des groupes de surfaces d'image partielles (14) de même dimension.

8. Dispositif selon l'une des revendications précédentes, **caractérisé en ce que** la surface d'image (12) consiste en des surfaces d'image partielle de même dimension.

9. Dispositif selon l'une des revendications précédentes, **caractérisé en ce que** les surfaces d'image partielles (14) possèdent, dans les deux directions (H, V), qui définissent la surface d'image (12) et s'étendent transversalement l'une par rapport à l'autre, des étendues maximales, qui sont du même ordre de grandeur.

10. Dispositif selon la revendication 9, **caractérisé en ce que** les étendues maximales sont approximativement identiques.

11. Dispositif selon l'une des revendications précédentes, **caractérisé en ce que** tous les points d'image (16) d'une surface d'image partielle (14) sont situés directement les uns à côtés des autres.

12. Dispositif selon l'une des revendications précédentes, **caractérisé en ce que** chaque unité d'éclairement (20) comporte un dispositif de déviation de rayonnement (48, 120, 241) qui est associé à cette unité.

13. Dispositif selon la revendication 12, **caractérisé en ce qu'**avec le dispositif de déviation de rayonnement (48, 120, 241), un déplacement relatif du champ de rayonnement sortant de chaque unité d'éclairement (20) par rapport aux points d'image (16) de la surface d'image partielle (14) peut être produit dans au moins une direction.

14. Dispositif selon la revendication 12 ou 13, **caractérisé en ce qu'**au moins un composant optique (30, 40, 81, 104, 222) de l'unité d'éclairement (20) est déplaçable par rapport à la surface d'image partielle (14) à l'aide du dispositif de déviation de rayonnement (48, 120).

15. Dispositif selon la revendication 14, **caractérisé en ce qu'**une sortie de rayonnement (31, 82, 224) du champ de rayonnement (32) sortant-de la source de rayonnement à semiconducteurs (30) est déplaçable par rapport à la surface d'image partielle (14), à l'aide du dispositif de déviation de rayonnement (48, 241).

16. Dispositif selon la revendication 14 ou 15, **caractérisé en ce qu'**au moins un composant (44, 104) du système optique de formation d'image (40) est déplaçable.

17. Dispositif selon l'une des revendications 12 à 16, **caractérisé en ce que** le dispositif de déviation de rayonnement (48, 120, 241) comprend au moins un dispositif d'entraînement micromécanique.

18. Dispositif selon la revendication 17, **caractérisé en ce que** le dispositif de déviation de rayonnement (48, 120) comporte deux dispositifs d'entraînement (50, 60, 130, 140), qui agissent dans des directions transversales l'une par rapport à l'autre.

19. Dispositif selon la revendication 17 ou 18, **caractérisé en ce que** le dispositif d'entraînement (50, 60, 239) est agencé sous la forme d'un dispositif d'entraînement en translation.

20. Dispositif selon la revendication 19, **caractérisé en ce que** le dispositif d'entraînement (50, 60) comporte un bras de guidage (53, 63), qui porte à une extrémité la composante optique (44, 30, 80) de l'unité d'éclairement (20) qui doit être translatée, et est monté fixe au niveau de l'autre extrémité.

21. Dispositif selon la revendication 20, **caractérisé en ce que** le bras de guidage (53, 63) peut être dévié à l'aide d'un champ électrique.

22. Dispositif selon la revendication 20 ou 21, **caractérisé en ce que** le bras de guidage (53, 63) est agencé sous la forme d'un élément élastique.

23. Dispositif selon l'une des revendications 17 ou 18, **caractérisé en ce que** le dispositif d'entraînement est agencé sous la forme d'un dispositif d'entraînement basculant (130, 140).

24. Dispositif selon la revendication 23, **caractérisé en ce que** le dispositif d'entraînement comporte deux éléments de support (134, 135, 144, 145) pouvant basculer l'un par rapport à l'autre autour d'un axe de basculement (132, 142).

25. Dispositif selon la revendication 24, **caractérisé en ce que** les éléments de support (134, 135, 144, 145) sont reliés par une barrette de matériau (136, 146) déformable élastiquement.

26. Dispositif selon l'une des revendications 23 ou 25, **caractérisé en ce que** les éléments de support (134, 135, 144, 145) sont déplaçables l'un par rapport à l'autre au moyen d'un champ électrique.

27. Dispositif selon l'une des revendications 17 à 26, **caractérisé en ce que** le dispositif d'entraînement (60, 140) est agencé sous la forme d'un dispositif d'entraînement réglable statique.

28. Dispositif selon l'une des revendications 17 à 27, **caractérisé en ce qu'**un dispositif d'entraînement (50, 130, 239) est agencé sous la forme d'un dispositif d'entraînement oscillant (29).

29. Dispositif selon la revendication 28, **caractérisé en ce que** le dispositif d'entraînement oscillant (50, 130, 239) travaille à proximité de sa fréquence de résonance.

30. Dispositif selon l'une des revendications précédentes, **caractérisé en ce que** chaque unité d'éclairement (220, 230) comporte une série (222) de sorties de rayonnement (224), dont le système de formation d'image (240) forme simultanément l'image sur une rangée de points d'images de la surface d'image partielle (14).

31. Dispositif selon la revendication 30, **caractérisé en ce que** le nombre des sorties de rayonnement (224) de la rangée (222) correspond au nombre de points d'image (16) de la rangée de points d'image (230) dans une direction, dans une direction (228) qui est parallèle à la rangée (122), de la surface d'image partielle correspondante (14), et l'éclairement des surfaces d'image partielles (14) est réalisé au moyen d'un dispositif (241) de déviation du rayonnement, dans une direction transversale par rapport à la rangée (222).

32. Dispositif selon la revendication 30 ou 31, **caractérisé en ce que** l'étendue de la rangée (222) de sorties pour le rayonnement (224) dans la direction longitudinale (226) de ces dernières est inférieure à l'étendue de la rangée correspondante de points d'image (230) dans cette direction (228).

33. Dispositif selon l'une des revendications 30 ou 32, **caractérisé en ce que** chaque unité d'éclairement (220) comporte trois rangées (222_{R}, 222_{G}, 222_{B}) de sorties pour le rayonnement (224_{R}, 224_{G}, 224_{B}).

34. Dispositif selon la revendication 33, **caractérisé en ce que** chacune des rangées (222_{R}, 222_{G}, 222_{B}) de sorties pour le rayonnement (224_{R}, 224_{G}, 224_{B}) délivre un rayonnement possédant l'une de trois couleurs pouvant être superposées pour obtenir la lumière blanche.

35. Dispositif selon la revendication 33 ou 34, **caractérisé en ce que** chacune des différentes rangées (222_{R}, 222_{G}, 222_{B}) de sorties pour le rayonnement (224_{R}, 224_{G}, 224_{B}) peut être activée séparément dans le temps par l'intermédiaire d'une commande (250).

36. Dispositif selon l'une des revendications précédentes, **caractérisé en ce qu'**au moins une source de rayonnement à semiconducteurs est associée à chaque sortie de rayonnement (31, 82, 224, 326).

37. Dispositif selon l'une des revendications précédentes 1 à 11, **caractérisé en ce que** l'unité d'éclairement (320) possède au moins une rangée d'éléments de modulation (324), qui modulent le rayonnement lors de sa transmission et dont les surfaces respectives de sortie de la lumière forment des sorties de rayonnement (326), dont le système optique de formation d'images (340) forme l'image conjointement sur la surface d'image partielle (14).

38. Dispositif selon la revendication 37, **caractérisé en ce que** l'unité d'éclairement (320) possède une matrice bidimensionnelle (322) d'éléments de modulation (324), qui forme une matrice bidimensionnelle de sorties pour le rayonnement (326).

39. Dispositif selon la revendication 38, **caractérisé en ce que** le nombre des éléments de modulation (324) de la matrice (322) correspond au nombre des points d'images (16) dans la surface d'image partielle correspondante (14).

40. Dispositif selon l'une des revendications 37 à 39, **caractérisé en ce que** les éléments de modulation (324) possèdent des surfaces d'entrée de la lumière, qui sont éclairées au moins par une source de rayonnement à semiconducteurs (344).

41. Dispositif selon la revendication 40, **caractérisé en ce que** la au moins une source de rayonnement à semiconducteurs (344) éclaire les surfaces d'entrée de la lumière de tous les éléments de modulation (324) d'une unité d'éclairement (320).

42. Dispositif selon l'une des revendications précédentes, **caractérisé en ce que** chaque unité d'éclairement (20, 220, 320) comprend au moins trois sources de rayonnement à semiconducteurs, qui produisent un rayonnement dans trois couleurs différentes pouvant être superposées pour former une lumière blanche.

43. Dispositif selon la revendication 42, **caractérisé en ce que** l'unité d'éclairement (20, 320) comporte trois sources de rayonnement à semiconducteurs servant à éclairer chaque sortie de rayonnement (31, 82, 326), qui produisent un rayonnement en trois couleurs pouvant être superposées pour former une lumière blanche.

44. Dispositif selon la revendication 42 ou 43, **caractérisé en ce que** le rayonnement des sources de rayonnement à semiconducteurs avec les couleurs, pouvant être superposées pour former une lumière blanche, est injecté dans un guide de lumière (80), qui guide le rayonnement, qui comprend les trois couleurs, jusqu'à une sortie (31) pour le rayonnement.

45. Dispositif selon l'une des revendications 1 à 42, **caractérisé en ce qu'**à chaque point d'image (16) sont associées trois sorties de rayonnement (44_{R}, 44_{G}, 44_{B}; 224_{R}, 224_{G}, 224_{B}).

46. Dispositif selon l'une des revendications 43 à 45, **caractérisé en ce que** les trois sources de rayonnement à semiconducteurs peuvent être activées à des instants différents.

47. Dispositif selon l'une des revendications précédentes, **caractérisé en ce que** la source de rayonnement à semiconducteurs est agencée sous la forme d'une diode à semiconducteurs.

48. Dispositif selon la revendication 47, **caractérisé en ce que** la diode à semiconducteurs est agencée sous la forme d'une diode LED résonante.

49. Dispositif selon la revendication 47, **caractérisé en ce que** la source de rayonnement à semiconducteurs est agencée sous la forme d'une source de rayonnement laser.
